# EUROPEAN PATENT APPLICATION

(11) **EP 4 563 019 A1**
(43) Date of publication of application: **04.06.2025**
(21) Application number: 23845262.7
(22) Date of filing: 04.07.2023
(51) Int. Cl.: A24F 40/40, A24F 40/46

(54) **RECEPTOR FOR AEROSOL GENERATING APPARATUS, AND AEROSOL GENERATING APPARATUS**

(30) Priority: 28.07.2022 CN 202210901671; 26.05.2023 CN 202321319281 U
(71) Applicant: Shenzhen First Union Technology Co., Ltd., Shenzhen, Guangdong 518000 (CN)
(72) Inventor: GONG, Weifeng, Shenzhen, Guangdong 518000 (CN); XU, Zhongli, Shenzhen, Guangdong 518000 (CN); LI, Yonghai, Shenzhen, Guangdong 518000 (CN)
(74) Representative: Ran, Handong
(86) International application number: PCT/CN2023/105739
(87) International publication number: WO 2024/022049

(57) **Abstract**

A heating assembly, an infrared heating assembly (5), a heating assembly mounting method, and an aerosol generating apparatus. The heating assembly (5) comprising: a tubular heating element (51), the heating element (51) enclosing and forming a heating cavity, the heating cavity being used for accommodating an aerosol-forming substrate; a temperature measurement element (53), used for sensing the temperature of the heating element (51); and a support (54), the support (54) comprising a layered component (541) made of a thermal insulation material, the layered component (541) being configured to surround at least part of the length of the heating element (51); wherein the support (54) has disposed thereon a clamping structure, the clamping structure being used for securing the temperature measurement element (53). The structure of the support (54) effectively prevents the support (54) from absorbing heat generated by the heating element (51), thereby improving the heat utilization rate of the heating assembly (5).

## Description

### CROSS-REFERENCE TO RELATED APPLICATIONS

This application claims priority to earlier Patent Application No. 202210901671.X, entitled "HEATING ASSEMBLY, INFRARED HEATING ASSEMBLY, MOUNTING METHOD THEREOF, AND AEROSOL GENERATING DEVICE" and filed with the China National Intellectual Property Administration on July 28, 2022, which is incorporated herein by reference in its entirety.

This application claims priority to earlier Patent Application No. 202321319281.8, entitled "HEATING ASSEMBLY AND AEROSOL GENERATING DEVICE" and filed with the China National Intellectual Property Administration on May 26, 2023, which is incorporated herein by reference in its entirety.

### TECHNICAL FIELD

Embodiments of this application relate to the field of aerosol generating devices, and in particular, to a heating assembly, an infrared heating assembly, a heating assembly mounting method, and an aerosol generating device.

### BACKGROUND

An aerosol generating device includes a heating device which releases an aerosol-forming substrate in the form of aerosols by heating rather than burning the aerosol-forming substrate. The heating device includes a heating element and a temperature measurement element. In the related art, there is a type of heating device in which the heating element is configured into the form of a heating tube, and the temperature measurement element in the heating device is wound on and fixed to the heating tube through a double-sided adhesive. A fixing manner of this temperature measurement element is not firm, and the temperature measurement element is easy to move, which makes temperature measurement of the temperature measurement element inaccurate, further affecting a heating effect of the heating device.

In the heating device, to assist in fixing the temperature measurement element and electrically connecting a load, the heating device further includes a bracket, where the bracket is generally made of a high-temperature-resistant PEEK material, the bracket is arranged close to the heating element, and the bracket absorbs heat. As a result, the bracket absorbs heat generated by the heating element, reducing the heat utilization rate of the heating element.

### SUMMARY

To resolve the problems of fixation of a temperature measurement element and heat absorption of a bracket in the related art, an embodiment of this application provides a heating assembly, configured to heat an aerosol-forming substrate to generate aerosols, and including:
a tubular heating element, where the heating element encloses to form a heating cavity, and the heating cavity is configured to accommodate the aerosol-forming substrate;
a temperature measurement element, fixed to a surface of the heating element; and
a support member, where the support member includes a layered component prepared by using a heat preservation material, and the layered component is configured to surround at least a part of a length of the heating element; and
   a clamping structure is arranged on the support member, and the clamping structure is configured to fix the temperature measurement element.

This application further provides a heating assembly, including:
a tubular heating element;
a temperature measurement element, fixed to a surface of the heating element; and
a support member, where the support member includes a layered component and a fixing tube, the layered component is configured to surround at least a part of a length of the heating element, and the fixing tube circumferentially wraps at least a part of an outer surface of the layered component, and the layered component is prepared by using a heat preservation material; and
a clamping structure is arranged on the support member, and the clamping structure is configured to fix the temperature measurement element.

This application further provides an infrared heating assembly, including:
a tubular heating element;
a temperature measurement element, fixed to a surface of the heating element; and
a support member, where the support member includes a layered component prepared by using aerogel, and the layered component is configured to surround at least a part of a length of the heating element; and
a clamping structure is arranged on the support member, and the clamping structure is configured to fix the temperature measurement element.

This application further provides a heating assembly mounting method, including:
winding a heat preservation layered component on an outer surface of a heating element;
sleeving a fixing tube on a periphery of the heat preservation layered component; and
inserting a temperature measurement element from an opening of the heat preservation layered component.

This application further provides an aerosol generating device, including a heating device and a power supply assembly providing electrical power to the heating device, where the heating device includes the heating assembly.

The support member in the foregoing heating assembly includes a layered component prepared by using a heat preservation material, and the layered component is arranged surrounding at least a part of a surface of the heating element, so that heat generated by the heating element is surrounded by the layered component, further reducing the heat of the heating element from being transferred to the outside. In addition, a clamping structure is further arranged on the support member, and it is firm and reliable to fix the temperature measurement element to the clamping structure, thereby further improving the accuracy of a temperature measurement result of the temperature measurement element, simplifying a structure, and improving the heat utilization rate of the heating assembly.

Another embodiment of this application provides a heating assembly and an aerosol generating device, helping ensure that the temperature measurement element is located at a correct temperature measurement position.

Another embodiment of this application provides a heating assembly, including:
a heating tube in which a heating cavity accommodating at least a part of an aerosol generating article is provided;
a temperature measurement element, including a probe and a conductive pin connected to the probe, the probe is in contact with the heating tube, and the conductive pin includes a bending portion; and
an anti-retraction portion, configured to stop the bending portion to prevent the probe from moving.

An embodiment of this application provides a heating assembly, including:
a heating tube in which a heating cavity accommodating at least a part of an aerosol generating article is provided;
a temperature measurement element, including a probe and a conductive pin connected to the probe; and
a fixing tube, surrounding at least a part of a periphery of the heating tube, where at least a part of the probe is kept between the fixing tube and the heating tube, a first through hole is provided on the fixing tube, and the conductive pin passes through the first through hole; and
an extending direction of the conductive pin between the fixing tube and the heating tube and a run-through direction of the first through hole are not located on the same straight line.

Another embodiment of this application provides an aerosol generating device, including the heating assembly, and further including a power supply assembly providing electric power to the heating assembly.

In the foregoing heating assembly and the aerosol generating device, the bending portion is formed on the conductive pin, and the anti-retraction portion can stop the bending portion, so that when the conductive pin is pulled, through coordination and cooperation between the anti-retraction portion and the bending portion, the probe can be prevented from moving, thereby ensuring that the probe can be kept at a preset temperature detection position.

### BRIEF DESCRIPTION OF THE DRAWINGS

One or more embodiments are exemplarily described with reference to the corresponding figures in the accompanying drawings, and the description does not constitute a limitation to the embodiments. Components in the accompanying drawings that have same reference numerals are represented as similar components, and unless otherwise particularly stated, the figures in the accompanying drawings are not drawn to scale.
FIG. 1 is a schematic diagram of an aerosol generating device according to an embodiment of this application;
FIG. 2 is a schematic diagram of a heating assembly according to an embodiment of this application;
FIG. 3 is an exploded view of a heating assembly according to an embodiment of this application;
FIG. 4 is a schematic diagram of a first layered component 231 according to an embodiment of this application;
FIG. 5 is a schematic diagram of an electrical connector according to an embodiment of this application;
FIG. 6 is a schematic diagram of a fixing tube according to an embodiment of this application;
FIG. 7 is a schematic diagram of an electric heating element according to an embodiment of this application;
FIG. 8 is another schematic diagram of an electric heating element according to an embodiment of this application;
FIG. 9 is a schematic diagram of a heating assembly with a fixing tube removed according to an embodiment of this application;
FIG. 10 is a schematic diagram of a heating assembly with an end cover according to an embodiment of this application;
FIG. 11 is a schematic diagram of a thermocouple temperature detector according to an embodiment of this application;
FIG. 12 is another schematic diagram of a thermocouple temperature detector according to an embodiment of this application;
FIG. 13 is a schematic structural diagram of an aerosol generating device according to an embodiment of this application;
FIG. 14 is a three-dimensional diagram of a heating assembly according to an embodiment of this application;
FIG. 15 is an exploded view of a heating assembly according to an embodiment of this application;
FIG. 16 is a three-dimensional diagram of a heating element according to an embodiment of this application;
FIG. 17 is a three-dimensional diagram of an electrical connector according to an embodiment of this application;
FIG. 18 is a three-dimensional diagram of a layered component according to an embodiment of this application;
FIG. 19 is a schematic structural diagram of a temperature measurement element and an electrical connector fixed to a layered component according to an embodiment of this application;
FIG. 20 is a three-dimensional diagram of a fixing tube according to an embodiment of this application; and
FIG. 21a to FIG. 21e are schematic diagrams of assembly of a heating assembly according to an embodiment of this application.

Reference numerals in the drawings:
1. Aerosol generating article;
2. Heating assembly; 21. Heating tube; 211. Heating cavity; 212. Base body; 213. Electric heating element; 2131. Heating member; 2312. Electrode member;
22. Electrical connector; 221. Main body portion; 2211. Connecting portion; 2212. Elastic piece; 222. Abutting portion; 2221. First abutting portion; 2222. Second abutting portion; 223. Hooking portion;
23. Layered component; 231. First layered component 231; 2311. Second guiding groove; 2312. First guiding groove; 232. Fixing tube; 2321. Through hole; 24. Clamping space; 25. Wire; 26. Temperature measurement element; 261. Probe; 262. Conductive pin; 2621. Second bending portion; 2622. Third bending portion; 263. Good thermal conductor; 2631. Base body; 2632. Protrusion; 2633. Abutting arm; 2634. Avoidance space; 27. End cover;
3. Power supply assembly; 31. Control board; 32. Battery;
4. Heating device; 41. Heating cavity;
5. Infrared heating assembly; 51. Infrared heating element; 511. Infrared electrothermal coating; 512. Conductive portion; 52. Electrical connector; 521. First electrical connector; 522. Second electrical connector; 523. Main body portion; 524. Conductive contact sheet; 525. Extending portion; 53. Temperature measurement element; 54. Support member; 541. Layered component; 5411. Longitudinal opening; 5412. First hole; 5413. Notch; 542. Fixing tube; and 5421. Fixing hole.

### DETAILED DESCRIPTION

For ease of understanding of this application, this application is described below in more detail with reference to the accompanying drawings and specific implementations.

It should be noted that all the directional indications (for example, upper, lower, left, right, front, rear, horizontal, and vertical) in the embodiments of this application model are merely used to explain a relative position relationship, motion statuses, and the like between components in a specific posture (as shown in the accompanying drawings). If the specific posture changes, the directional indication correspondingly changes. The "connection" may be a direct connection or an indirect connection, and the "arrangement", "arranged on", and "provided on" may be direct or indirect.

In addition, for example, "first", "second", and the like involved in this application are merely used for a purpose of description, and shall not be construed as indicating or implying relative importance or implicitly indicating a quantity of indicated technical features. Therefore, a feature defined by "first" or "second" may explicitly indicate or implicitly include at least one of such features.

### Embodiment 1:

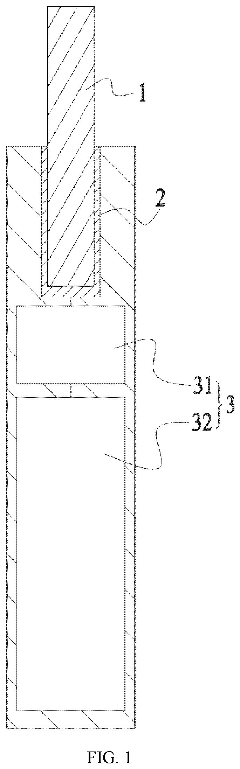

Referring to FIG. 1, an embodiment of this application provides an aerosol generating device, where the device may be configured to heat an aerosol generating article 1 to produce aerosols from the aerosol generating article 1.

In an embodiment, the aerosol generating article 1 may be an article including an aerosol-forming substrate, and the aerosol-forming substrate is intended to release volatile compounds for forming aerosols through heating rather than burning. Compared with aerosols generated by burning or performing thermal degradation on the aerosol-forming substrate, the aerosols formed by heating the aerosol-forming substrate may include fewer known harmful components. In an example, the aerosol generating article is removably connected to an aerosol generating device. The aerosol generating article 1 may be disposable or reusable. In an example, the aerosol-forming substrate may include tobaccos, tobacco leaves, tobacco shreds, or tobacco pastes.

The aerosol generating device is a device connected to or interacting with the aerosol generating article 1 to form inhalable aerosols. For example, the aerosol generating device is an electric operating aerosol generating device and includes a power supply assembly 3 and a heating assembly 2, and the power supply assembly 3 supplies power to cause the heating assembly 3 to heat the aerosol generating article 1.

The heating assembly 2 includes an external heating assembly, an internal heating assembly, or an air heating assembly. The term "external heating assembly" used in this specification is a heating assembly located outside the aerosol generating article when the aerosol generating article and the aerosol generating device are combined. The term "internal heating assembly" used in this specification is a heating assembly at least partially located inside the aerosol generating article when the aerosol generating article and the aerosol generating device are combined. The term "air heating assembly" used in this specification is a heating assembly configured to heat air in an air inlet channel located upstream of the aerosol generating article to convert at least some air in an airflow channel into hot air and cause the hot air to enter the aerosol generating article to release heat so as to heat the aerosol generating article.

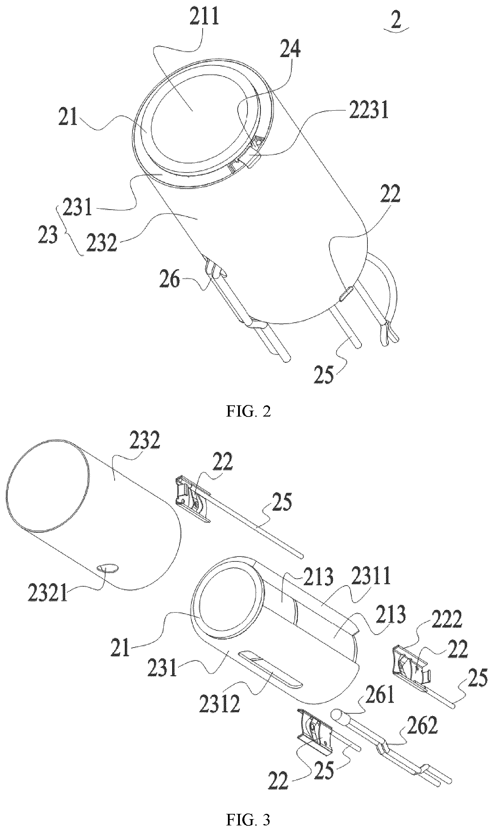

Referring to FIG. 2 and FIG. 3, the heating assembly 2 includes a heating tube 21, the heating tube 21 includes a heating cavity 211 that can accommodate at least a part of the aerosol generating article 1, and the aerosol-forming substrate in the aerosol generating article 1 is heated in the heating cavity 211 to generate aerosols. Referring to FIG. 2 and FIG. 3, an upper end of the heating cavity 211 is open, so that the upper end of the heating cavity 211 includes an entrance for insertion of the aerosol generating article 1 into the heating cavity 211, and the aerosol generating article 1 can be inserted into the heating cavity 211 from the upper end of the heating cavity 211.

When the heating assembly 2 is an internal heating assembly, the heating assembly 2 further includes an insertion member at least partially arranged in the heating cavity 211, and when the aerosol generating article 1 is inserted into the heating cavity 211, at least a part of the insertion member is inserted into the aerosol-forming substrate. In this embodiment, the insertion member may include a susceptor. The term "susceptor" used in this specification is a material that can convert electromagnetic energy into heat. When the susceptor is located in a varying electromagnetic field, an eddy current can be formed in the susceptor to cause the susceptor to generate heat.

Based on this, the heating tube 21 may be provided with or connected to a magnetic field generator. The magnetic field generator is configured to generate a varying magnetic field, to cause the insertion member in the heating tube 21 to generate heat. The magnetic field generator is electrically connected to the power supply assembly, and the power supply assembly provides a current for the magnetic field generator to generate the varying magnetic field. The magnetic field generator may include one or more induction coils for generating the varying magnetic field, and the one or more induction coil may be combined on the heating tube 21 to surround the susceptor. In an embodiment, the one or more induction coils may be formed on an outer surface of the heating tube 21 in a printing manner, or the one or more induction coils may be combined on the outer surface of the heating tube 21 in the form of a film layer.

The susceptor may include metal or carbon. In an embodiment, the susceptor may include a ferromagnetic material, for example, ferrite, ferromagnetic steel, or stainless steel. In an embodiment, the susceptor includes nickel-iron alloy. In an embodiment, the susceptor includes 400 series stainless steel, and the 400 series stainless steel includes 410, 420, or 430 stainless steel. When the susceptor is located in electromagnetic fields having similar frequencies and field strengths, different materials consume different amounts of energy. Therefore, parameters of the susceptor, for example, a material type, a length, a width, and a thickness may all be changed to provide required power consumption in existing electromagnetic fields.

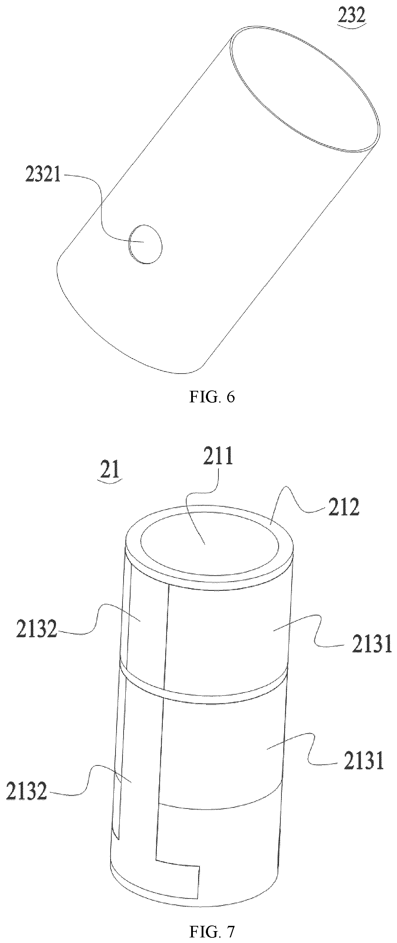

When the heating assembly 2 is an external heating assembly, referring to FIG. 3, FIG. 7, and FIG. 8, the heating tube 21 may include a tubular base body 212 and an electric heating element 213 combined on the base body 212.

The electric heating element 213 may include a resistive heating element, and a resistive material in the resistive heating element includes but is not limited to: a semiconductor like doped ceramic or conductive ceramic (for example, molybdenum disilicide), carbon, graphite, metal, metal alloy, and a composite material made of a ceramic material and a metal material. The composite material may include doped or non-doped ceramic. A suitable example of the doped ceramic includes doped silicon carbide. A suitable example of the metal includes titanium, zirconium, tantalum, and platinum group metal. A suitable example of the metal alloy includes stainless steel, constantan, nickel-containing alloy, cobalt-containing alloy, chromium-containing alloy, aluminum-containing alloy, titanium-containing alloy, zirconium-containing alloy, hafnium-containing alloy, niobium-containing alloy, molybdenum-containing alloy, tantalum-containing alloy, tungsten-containing alloy, stannum-containing alloy, gallium-containing alloy, manganese-containing alloy, and iron-containing alloy, nickel-based, iron-based, or cobalt-based superalloy, stainless steel, iron-aluminum-based alloy, and iron-manganese-aluminum-based alloy. In the composite material, to make the resistive material visible, the resistive material needs to be buried in an insulating material and wrapped or coated by the insulating material, or vice versa.

The resistive heating element may be a resistive material coating or a resistive material printed layer formed on an outer surface of the base body 212; or the resistive heating element may be a heating film wrapped on the outer surface of the base body 212; or the resistive heating element may be a resistance wire or a resistance mesh arranged on the outer surface of the base body 212; or the resistive heating element may be conductive ceramic. It should be noted that, in another embodiment, the base body 212 of the heating tube may be made of conductive ceramic, so that there is no need to additionally arrange the resistive heating element.

The electric heating element 213 may include an infrared heating element, the infrared heating element may be an infrared electrothermal coating, the infrared heating element is formed on the outer surface of the base body 212, and the base body 212 is formed by a material that can transmit an infrared ray such as quartz. The infrared heating element can generate heat when being powered on, to further generate an infrared with a specific wavelength, for example, an infrared ray whose wavelength ranges from 0.75 µm to 1000 µm. Optionally, the infrared electrothermal coating is obtained by fully stirring far-infrared electrothermal inks, ceramic powders, and an inorganic binding agent uniformly and printing the mixture on the outer surface of the base body, and drying and curing the mixture for specific time, where a thickness of the infrared electrothermal coating ranges from 30 µm to 50 µm. Certainly, the infrared electrothermal coating may alternatively be obtained by mixing and stirring tin tetrachloride, tin oxide, antimony trichloride, titanium tetrachloride, and anhydrous copper sulfate according to a specific proportion and printing the mixture on the outer surface of the base body; or may be one of a silicon carbide ceramic layer, a carbon fiber composite layer, a zirconium-titanium-based oxide ceramic layer, a zirconium-titanium-based nitride ceramic layer, a zirconium-titanium-based boride ceramic layer, a zirconium-titanium-based carbide ceramic layer, an iron-based oxide ceramic layer, an iron-based nitride ceramic layer, an iron-based boride ceramic layer, an iron-based carbide ceramic layer, a rare earth-based oxide ceramic layer, a rare earth-based nitride ceramic layer, a rare earth-based boride ceramic layer, a rare earth-based carbide ceramic layer, a nickel-cobalt-based oxide ceramic layer, a nickel-cobalt-based nitride ceramic layer, a nickel-cobalt-based boride ceramic layer, a nickel-cobalt-based carbide ceramic layer, or a high-silicon molecular sieve ceramic layer. Alternatively, the infrared electrothermal coating may be an existing coating made of another material.

In an embodiment, the electric heating element 213 includes a heating member 2131 generating heat or an infrared ray when being powered on and an electrode member 2312 electrically connected to the heating member 2131. A resistance of the electrode member 2312 is lower than a resistance of the heating member 2131, and the electrode member 2312 is configured to electrically connect the heating member 2131 and an electrical connector 22. In an embodiment, the electric heating element 213 includes a heating member 2131 generating heat or an infrared ray when being powered on, and the heating member 2131 is directly electrically connected to the electrical connector 22.

The outer surface of the heating tube 21 includes a preset temperature measurement position, that is, a second position, the second position may be located in a heat centralized region of the heating tube 21, and the heat centralized region of the heating tube 21 has a higher temperature or a higher temperature rise speed than another region of the heating tube 21.

Referring to FIG. 2, FIG. 3, and FIG. 9, the heating assembly 2 includes a temperature measurement element 26, and the temperature measurement element 26 is close to the outer surface of the heating tube 21 to sense a temperature of the heating tube 21. Specifically, the temperature measurement element 26 includes a probe 261 and a conductive pin 262 connected to the probe 261, and the probe 261 is arranged in contact with the second position of the heating tube 21. In an example of this application, the temperature measurement element 26 is configured as a thermistor temperature detector. A thermistor includes a thermistor chip and two conductive pins 262, the thermistor chip is arranged in the probe 261, and the two conductive pins are respectively connected to two electrodes of the thermistor chip. At least a part of the thermistor chip and the two conductive pins 262 are encapsulated in an outer shell to form the thermistor temperature detector. The two conductive pins 262 are electrically connected to a control board 31 of the power supply assembly 3, to transmit temperature information to the control board 31 of the power supply assembly 3, and the control board 31 further controls, according to the real-time temperature information of the heating tube 21 measured by the thermistor temperature detector, an amount of electric power provided by a battery 32 to the heating tube 21. An outer shell of the probe 261 of the thermistor temperature detector may include a good thermal conductor 263. The good thermal conductor 263 is made of a thermal conductive material and has a high thermal conductivity. The thermal conductive material may be understood as a material whose thermal conductivity is at least 10 W/m·K, preferably at least 40 W/m·K, and more preferably at least 100 W/m·K at 23°C and relative humidity of 50%. Specifically, the thermal conductive material is formed by a material whose thermal conductivity is at least 40 W/m·K, preferably at least 100 W/m·K, more preferably 150 W/m·K, and most preferably 200 W/m·K at 23°C and relative humidity of 50%. A suitable thermal conductive material includes but is not limited to graphite, graphene, aluminum, copper, zinc, steel, silver, a thermal conductive polymer, or any combination or alloy thereof. The good thermal conductor 263 is arranged close to the heating tube 21, and since the good thermal conductor 263 has a good thermal conductivity, a temperature consistent with a temperature on the surface of the heating tube 21 can be quickly reached. To improve sensitivity of the good thermal conductor 263 for a temperature change of the heating tube 21 and reduce heat absorbed by the good thermal conductor 263 from the heating tube 21, a thickness of the thermal conductive material forming the good thermal conductor 263 may be reduced. For example, the thickness of the thermal conductive material may range from 0.03 mm to 1.5 mm, or the thickness of the thermal conductive material may be 0.1 mm.

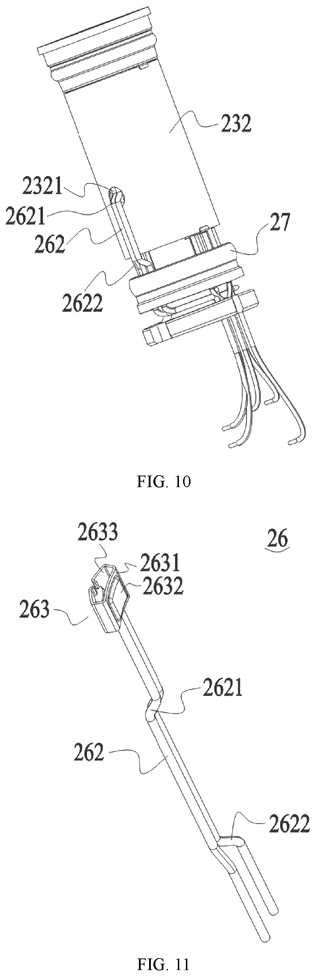

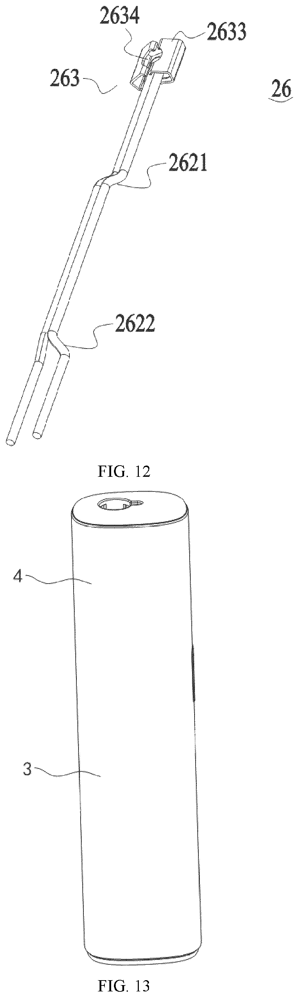

In another embodiment, referring to FIG. 11 and FIG. 12, the temperature measurement element 26 is configured as a thermocouple temperature detector. The thermocouple temperature detector includes a good thermal conductor 263 and two thermocouple wires, hot ends of the two thermocouple wires are connected to the good thermal conductor 263, and cold ends of the two thermocouple wires are configured to be electrically connected to the control board 31 of the power supply assembly 3, so that the control board 31 may obtain, according to a temperature difference between the hot end and the cold end of the thermocouple wire, a temperature at the hot end of the thermocouple wire.

Referring to FIG. 11 and FIG. 12, the good thermal conductor 263 includes a base body 2631, a protrusion 2632 formed from the base body 2631 toward the outer surface of the heating tube 21, and two elastic abutting arms 2633 bending and extending from two opposite sides of the base body 2631. A welding avoidance space 2634 exists between free ends of the two elastic abutting arms 2633, the hot ends of the two thermocouple wires are welded on the base body 2631 or a surface of the protrusion 2632 facing away from the heating tube 21, the hot ends of the two thermocouple wires may be exposed through the welding avoidance space 2634, and welding laser or a welding heat may pass through the welding avoidance space 2634 to weld the hot ends of the two thermocouple wires and the good thermal conductor 263. In a moving direction in which the temperature measurement element 26 moves along the surface of the heating tube 21 to cause the probe 261 to reach the second position, the moving direction is referred to as a first direction. To prevent an edge of the base body 2631 from scuffing or scratching a surface layer (for example, an insulating layer) of the heating tube 21, the probe 261 may include the protrusion 2632 formed from the base body 2631 toward the outer surface of the heating tube 21, and the protrusion 2632 at least includes an arc-shaped corner at an edge in the first direction, so that in a process of causing the thermocouple temperature detector to move along the outer surface of the heating tube 21 to the second position, the edge of the protrusion 2632 in the first direction can be prevented from scratching the surface layer of the heating tube 21. For example, the protrusion 2632 may be prevented from scratching the insulating layer on the outer surface of the heating tube 21. Since a material like a metal sheet forming the probe 261 has a small thickness, the thickness may range from 0.03 mm to 1.2 mm, it is more effective to form a protrusion 2632 with an arc-shaped corner at an edge through stamping compared with polishing an edge of the material like the metal sheet into a rounded corner. It should be noted that, the good thermal conductor 263 forms the probe 261 of the thermocouple temperature detector, and the two thermocouple wires form the conductive pin 262.

In a process of arranging the probe 261 of the temperature measurement element 26 at the second position to cause the conductive pin 262 connected to the probe 261 to be electrically connected to the power supply assembly 3, the conductive pin 262 is generally pulled, and to prevent the probe 261 from deviating from the second position under pulling of the conductive pin 262, the heating assembly 2 may be constructed into a structure that can prevent the probe 261 from moving toward a pulling direction.

In an embodiment, the heating assembly 2 includes a fixing tube 232, the fixing tube 232 is wound on at least a part of a periphery of the heating tube 21, and at least a part of the probe 261 is kept between the fixing tube 232 and the heating tube 21. Specifically, the fixing tube 232 may crush the probe 261, to cause the probe 261 to be close to the heating tube 21 and prevent the probe 261 from moving.

A first through hole 2321 for the conductive pin 262 to pass through is provided on the fixing tube 232, and a run-through direction of the first through hole 2321 and an extending direction of the conductive pin 262 between the fixing tube 232 and the heating tube 21 are not located on the same straight line, so that the first through hole 2321 can change the extending direction of the conductive pin 262, and therefore, the conductive pin 262 needs to bend when passing through the first through hole 2321. Certainly, a case that the conductive pin 262 between the fixing tube 232 and the heating tube 21 is bent is not excluded. In an example, a central axis of the first through hole 2321 inclines relative to an axial direction of the heating tube 21, for example, the central axis of the first through hole 2321 is perpendicular to the axial direction of the heating tube 21, so that the conductive pin 262 connected to the probe 261 needs to change the extending direction to pass through the first through hole 2321, or the conductive pin 262 located in the first through hole 2321 needs to have a different extending direction from that of the conductive pin 262 located between the probe 261 and the first through hole 2321, so that the conductive pin 262 is bent to pass through the first through hole 2321.

For clear description, the conductive pin 262 between the probe 261 and the first through hole 2321 is defined as a first part, the conductive pin 262 located in the first through hole 2321 is defined as a second part, and the conductive pin 262 located outside the first through hole 2321 is defined as a third part, where the first part and the second part have different extending directions, that is, bending occurs between the first part and the second part. When the third part is pulled, the first part and the third part bear different acting forces due to the bending of the conductive pin 262, so that the acting force borne by the first part is less than the acting force borne by the third part. It should be noted that, the first part may have a specific length and can be located between the fixing tube 232 and the heating tube 21. However, this application is not limited thereto.

Specifically, when the third part is pulled, a hole wall of the first through hole 2321 may be in contact with and support the second part, or the hole wall of the first through hole 2321 may be in contact with and support the conductive pin 262, and due to the bending formed by the first through hole 2321, a support force provided by the hole wall of the first through hole 2321 to the conductive pin 262 can reduce the acting force borne by the first part.

Alternatively, when the third part is pulled tinily, a bending degree of the bending formed due to the first through hole 2321 may be changed, for example, an angle between the first part and the second part may be increased, to cause the conductive pin 262 to extend by a suitable distance in a direction of a pulling force, thereby reducing a pulling force that should be borne by the first part.

Therefore, the bending formed due to the first through hole 2321 can reduce an acting force borne by the probe 261 along the conductive pin 262, helping prevent the probe 261 from moving.

In an embodiment, referring to FIG. 2 and FIG. 3, the conductive pin 262 includes a bending portion formed through bending, where there may be one or more bending portions, and the heating assembly 2 further includes an anti-retraction portion, where there may be one or more anti-retraction portions. Each anti-retraction portion is at least arranged corresponding to one bending portion, and the anti-retraction portion and the corresponding bending portion may be close to each other but are not in contact with each other, or the anti-retraction portion and the corresponding bending portion may be in contact with each other. Therefore, when the conductive pin 262 is pulled, the anti-retraction portion can stop the bending portion that comes into contact with the anti-retraction portion through deformation or stop the bending portion that is in contact with the anti-retraction portion, to provide a stop force to resist the acting force pulling the conductive pin 262, and the stop force can reduce a pulling force of the conductive pin 262 to the probe 261, so that the anti-retraction portion can prevent the probe 261 connected to the conductive pin 262 from deviating from the second position.

For example, in a process of arranging the probe 261 of the temperature measurement element 26 at the second position to cause the conductive pin 262 connected to the probe 261 to be electrically connected to the power supply assembly 3, the conductive pin 262 is generally pulled. In this case, through coordination between the anti-retraction portion and the bending portion, the pulling force of the conductive pin 262 to the probe 261 can be reduced when the conductive pin 262 is pulled, helping keep the probe 261 at the second position and helping prevent the probe 261 from moving. In addition, the anti-retraction portion and the bending portion can reduce the acting force causing the conductive pin 262 to pull the probe 261, helping prevent the pulling force from damaging the connection integrity between the probe 261 and the conductive pin 262 and helping protect the temperature measurement element 26.

In an embodiment, referring to FIG. 2 and FIG. 3, the outer surface of the heating tube 21 further includes a first position, the heating assembly 2 includes a layered component 23, and the layered component 23 is arranged surrounding at least a part of the heating tube 21. The layered component 23 includes a first layered component 231, the first layered component 231 includes a first guiding groove 2312, the first guiding groove 2312 communicates the first position with the second position, at least the second position in the first position and the second position may be exposed in the first guiding groove 2312, and the first guiding groove 2312 may provide a channel for guiding the probe 261 from the first position to the second position. The probe 261 may move from the first position to the second position along the surface of the heating tube 21. In an example, in the axial direction of the heating tube 21, a length of the first guiding groove 2312 is consistent with a length of the probe 261. In an example, in the axial direction of the heating tube 21, a length of the first guiding groove 2312 is greater than a length of the probe 261.

The conductive pin 262 includes the bending portion at the first position or a position adjacent to the first position, and correspondingly, an anti-retraction portion exists at the first position or the position adjacent to the first position. The anti-retraction portion at this position stops the bending portion at the position, to prevent the probe 261 from exiting the second position when the conductive pin 262 is pulled.

An extending direction of the first guiding groove 2312 may be approximately parallel to the axial direction of the heating tube 21. The second position may be arranged at an end of the first guiding groove 2312, that is, in a direction of the first guiding groove 2312 guiding to the second position, the first layered component 231 includes a first end wall defining an extension end point of the first guiding groove 2312, and the probe 261 is stopped by the first end wall at the second position, to ensure that the probe 261 can be accurately moved to the second position.

A width of the first guiding groove 2312 may be greater than a width of the probe 261, so that in a process of causing the probe 261 to move along the first guiding groove 2312 to the second position, resistance of the first guiding groove 2312 to the probe 261 can be reduced. A width of the first guiding groove 2312 may be equal to a width of the probe 261, so that the first guiding groove 2312 is provided on groove walls on two opposite sides of the temperature measurement element 26, thereby preventing unexpected movement of the probe 261 in a circumferential direction of the heating tube 21. Certainly, in another embodiment, the width of the first guiding groove 2312 may be slightly less than the width of the probe 261, so that the first guiding groove 2312 can clamp the probe 261, helping keep the probe 261 at the second position.

In an example, the first position may also be exposed in the first guiding groove 2312, and the first guiding groove 2312 can provide a channel for moving the probe 261 from the first position to the second position. In addition, in the first guiding groove 2312, the first position is different from the second position, and the first position and the second position may be respectively located at two opposite ends of the first guiding groove 2312. However, this application is not limited thereto.

More specifically, the first position may be adjacent to an extension start point of the first guiding groove 2312, that is, in the direction of the first guiding groove 2312 guiding to the second position, the first layered component 231 includes a second end wall defining the extension start point of the first guiding groove 2312, when the probe 261 is at the second position, a part of the conductive pin 262 is accommodated in the first guiding groove 2312, and a part of the conductive pin 262 at the first position extends in a radial direction of the heating tube 21 and extends to the outside of the first guiding groove 2312. Therefore, one bending portion on the conductive pin 262 may be formed in the first guiding groove 2312 and at a position corresponding to the first position, where the bending portion is referred to as a first bending portion, the second end wall may become an anti-retraction portion, where the anti-retraction portion is referred to as a first anti-retraction portion. The first anti-retraction portion is in contact with or close to the first bending portion formed in the first guiding groove 2312, so that when the conductive pin 262 is pulled, the first anti-retraction portion can stop the first bending portion, thereby preventing the probe 21 from moving.

In an example, the first position is located outside the first guiding groove, the heating assembly further includes an end cover arranged at an upper end or a lower end of the heating tube, the first position is close to one end cover, the end cover close to the first position is referred to as a first end cover, and the first position is located between the first layered component and the first end cover. In addition, a part of the conductive pin extends at the first position in the radial direction of the heating tube, so that at least a part of the conductive pin located outside the first guiding groove can be bent relative to the conductive pin located in the first guiding groove, and the conductive pin is provided with the bending portion at the position adjacent to the first position. The first end cover has an edge whose outer diameter is greater than an outer diameter of the heating tube, and the edge form the anti-retraction portion that can support the bending portion described in this example, thereby preventing the probe from moving when the conductive pin is pulled.

In an embodiment, the heating assembly 2 includes a fixing tube 232 and a first layered component 231 simultaneously, the fixing tube 232 is arranged at a periphery of the first layered component 231, and the anti-retraction portion is arranged on the fixing tube 232, where the anti-retraction portion arranged on the fixing tube 232 is referred to as a second anti-retraction portion.

Based on this, in this embodiment, the second anti-retraction portion may include a first through hole 2321 provided on the fixing tube 232, the first through hole 2321 is in communication with the first position, the first through hole 2321 may allow the temperature measurement element 26 to pass through, the temperature measurement element 26 passes through the first through hole 2321 and enters the first guiding groove 2312, and the probe 261 may be moved along the first guiding groove 2312 to the second position. The first through hole 2321 may be provided directly facing the first position.

Referring to FIG. 2 and FIG. 10, one bending portion in the conductive pin 262 is a second bending portion 2621, and at least a part of the second bending portion 2621 may be located in the first through hole 2321. In this embodiment, the second bending portion 262 may be formed since an orientation of the first through hole 2321 and the extending direction of the first guiding groove 2312 are not located on the same straight line in a process that the conductive pin 262 passes through the first through hole 2321, or the second bending portion 262 may be formed before the conductive pin 262 passes through the first through hole 2321.

In an example, the second bending portion 2621 is suspended in the first through hole 2321 in an initial state, so that the second bending portion 2621 is not in contact with the hole wall of the first through hole 2321. When the conductive pin 262 is pulled, the second bending portion 2621 is deformed. For example, when the conductive pin 262 is pulled, the second bending portion 2621 is deformed with a reduced bending degree, so that the second bending portion 2621 extends. In this case, a pulling force of the conductive pin 262 to the probe 262 is less than a pulling force that the conductive pin 262 encounters, when the conductive pin 262 continues to be pulled to cause the second bending portion 2621 to extend to be in contact with the hole wall of the first through hole 2321, the hole wall of the first through hole 2321 can provide an acting force supporting the second bending portion 2621, and a component of the acting force in a reverse direction of the pulling force that the conductive pin 262 encounters and a component of the acting force in a direction perpendicular to the pulling force that the conductive pin 262 encounters are both less than the pulling force that the conductive pin 262 encounters, so that the pulling force of the conductive pin 262 to the probe 261 can be reduced, helping prevent the probe 261 from being removed from the second position.

In an example, the second bending portion 2621 is in contact with at least a part of the hole wall of the first through hole 2321 in an initial state, so that when the conductive pin 262 is pulled, the hole wall of the first through hole 2321 can provide an acting force supporting the second bending portion 2621, and the acting force can reduce a pulling force of the conductive pin 262 to the probe 261. Specifically, due to the second bending portion 2621, the conductive pin 262 includes a first step, and the first through hole 2321 supports the first step, so that the first through hole 2321 can prevent the second bending portion 2621 from exiting the first through hole 2321, and further prevent the probe 261 from moving from the second position to the first position.

Referring to FIG. 2 and FIG. 3, in a process that the probe 261 of the temperature measurement element 26 moves along a second guiding groove 2312 to the second position, a part of the conductive pin 262 of the temperature measurement element 26 passes through the first through hole 2321 to enter the second guiding groove 2312, and a part of the conductive pin is located outside the fixing tube 232. The fixing tube 232 can block a periphery of the second position, so that the fixing tube 232 can block the probe 261 of the temperature measurement element 26, and the probe 261 can be hidden between the heating tube 21 and the fixing tube 232. Therefore, in a subsequent assembly or processing process of the heating assembly 2, the fixing tube 232 can insulate other components in addition to the heating assembly 2 from being in contact with the probe 261, thereby protecting the probe 261 and preventing displacement of the probe 261.

Therefore, after arrangement of the heating tube 21, the first layered component 231, and the fixing tube 232 is completed, the probe 261 may be caused to pass through the fixing tube 232 through the first through hole 2321 and move from the first position to the blocked second position through the first guiding groove 2312.

In an example, a thickness of the probe 261 in the radial direction of the heating tube 21 is greater than a thickness D of the first layered component 231, so that the probe 261 can protrude in the radial direction of the heating tube 21 out of the second guiding groove 2312, and the probe 261 can be in direct contact with the fixing tube 232 and be directly crushed inward by the fixing tube 232 in the radial direction of the heating tube 21, where a radius of the fixing tube 232 (for example, an inner radius of the fixing tube) may be greater than or equal to a sum of a radius of the heating tube 21 (for example, an outer radius of the heating tube 21) and the thickness of the probe 261 in the radial direction of the heating tube 21. For ease of moving the probe 261 from the first position to the second position, preferably, the inner radius of the fixing tube 232 is greater than the sum of the outer radius of the heating tube 21 and the thickness of the probe in the radial direction of the heating tube 21.

Referring to FIG. 2, FIG. 3, and FIG. 5, the heating assembly 2 further includes an electrical connector 22 electrically connected to the heating tube 21, and the electrical connector 22 is electrically connected to the heating tube 21, so that an induction coil arranged on the heating tube 21, the electric heating element 213, or the base body 212 prepared by using conductive ceramic is electrically connected to the electrical connector 22. The electrical connector 22 may be electrically connected to the power supply assembly 3 through a wire 25 or another conductive element, or the electrical connector 22 may be directly electrically connected to the power supply assembly 3.

At least a part of the electrical connector 22 is arranged between the heating tube 21 and the fixing tube 232, the electrical connector 22 abuts against the fixing tube 232 to provide a tensioning force for the fixing tube 232 to tension, and the fixing tube 232 is configured to crush the probe 261 inward in the radial direction of the heating tube 21 under an action of the tensioning force, so that the probe 261 is close to the second position of the heating tube 21.

Based on this, for ease of moving the probe 261 along the first guiding groove 2312 to the second position, in a process of assembling the heating assembly 2, the temperature measurement element 26 may be assembled first, and when the probe 261 is pushed to the second position, at least a part of the electrical connector 22 is then inserted between the heating tube 21 and the fixing tube 232, so that the electrical connector 24 abuts against the heating tube 21 and the fixing tube 232 respectively toward two opposite sides. In this case, the fixing tube 232 tensions, and the tensioned fixing tube 232 is tightened to crush the probe 261 inward, so that the probe 261 is close to the second position of the heating tube 21.

A thickness of the electrical connector 22 in the radial direction of the heating tube 21 is greater than the thickness of the probe 261 in the radial direction of the heating tube 21; or the electrical connector 22 includes a main body portion electrically abutting against the heating tube 21 and an abutting portion 222 extending from the main body portion 221 in the radial direction of the heating tube 21, where the abutting portion 222 abuts against the fixing tube 232, and an extension length L of the abutting portion 222 in the radial direction of the heating tube 21 is greater than the thickness of the probe 261. In this way, the electrical connector 22 can provide the tensioning force for the fixing tube 232 to tension.

The abutting portion 222 may include a first abutting portion 2221 and a second abutting portion 2222 arranged on two opposite sides of the main body portion 221, that is, the first abutting portion 2221 and the second abutting portion 2222 are spaced apart from each other, and a plurality of abutting portions 222 respectively abut against different positions of the fixing tube 232, helping prevent stress concentration of the fixing tube 232, and helping prevent the fixing tube 232 from being pierced, punctured, or scratched by the abutting portion 222.

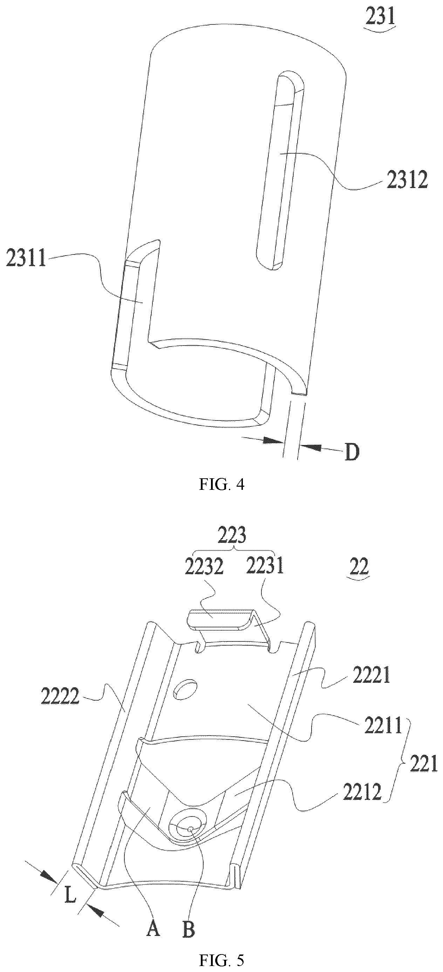

In an embodiment, referring to FIG. 3 and FIG. 4, to prevent the abutting portion 222 from scratching or piercing the fixing tube 232, the abutting portion 222 includes a rounded abutting surface, and the abutting portion 222 abuts against an inner wall of the fixing tube 232 through the rounded abutting surface. The rounded abutting surface refers to that the abutting surface is a smooth planar surface or a smooth arc surface, and the rounded abutting surface is not provided with a spiked or sharp edge, where a connection angle between the abutting surface and an adjacent surface may be a rounded angle.

Referring to FIG. 3 and FIG. 4, the main body portion 221 abuts against the heating tube 21, and the abutting portion 222 and the main body portion 221 may be integrally formed. Specifically, the abutting portion 222 may be formed through extension from the main body portion 221 in the radial direction of the heating tube 21.

Referring to FIG. 4, the abutting portion 222 may be constructed to have a fold in the radial direction of the heating tube 21, a smooth arc-shaped curve surface is formed at the fold of the abutting portion, and the abutting surface is formed at the fold of the abutting portion 222, that is, at least a part of the arc-shaped curve surface forms the abutting surface of the abutting portion 222.

On one hand, the abutting portion 222 may be folded to increase a strength of the abutting portion 222, to prevent the abutting portion 222 from being deformed when abutting against the fixing tube 232. On the other hand, the abutting portion 222 may be folded to increase an abutting area between the abutting portion 222 and the fixing tube 232, helping protect the fixing tube 232. In addition, a thickness of a metal sheet forming the electrical connector 22 does not exceed 5 mm. Therefore, the smooth abutting surface with a large area formed by folding the abutting portion 222 has lowest costs and a simplest process.

To ensure that the fixing tube 232 can crush the probe 261 inward, projections of the electrical connector 22 and the probe 261 at the upper end or the lower end of the heating tube 21 do not overlap with each other, to prevent the electrical connector 22 from affecting an acting force of the fixing tube 232 crushing the temperature measurement element 26 or the probe.

Specifically, the heating assembly 2 further includes a clamping space 24 provided between the heating tube 21 and the fixing tube 232, at least a part of the electrical connector 22 is accommodated in the clamping space 24, and the electrical connector 22 abuts against the heating tube 21 in the clamping space 24 and is electrically connected to the heating tube through abutment. The clamping space 24 includes an entrance for the at least a part of the electrical connector 22 to enter. For example, an upper end and/or a lower end of the clamping space 24 are open, and the open part forms the entrance. Therefore, in a formation process of the heating assembly 2, the heating tube 21 may be first combined with the fixing tube 232, the clamping space 24 is formed between the fixing tube 232 and the heating tube 21, the at least a part of the electrical connector 22 is then inserted into the clamping space 24 from the entrance of the clamping space 24, so that the at least a part of the electrical connector 22 is kept in the clamping space 24. In addition, the fixing tube 232 can crush the electrical connector 22, so that stable electrical abutment is kept between the electrical connector 22 and the heating tube 21. Compared with using a manner such as welding, this process is simpler, which is beneficial to improving production efficiency and reducing production costs.

The first layered component 231 defines a part of a boundary of the clamping space 24, and the clamping space 24 may be formed in a region not covered by the first layered component 231 between the heating tube 21 and the fixing tube 232.

In an embodiment, the electrical connector is constructed into annular and wound on the outer surface of the heating tube, or the electrical connector is constructed into tubular and sleeved on the outer surface of the heating tube. Based on this, an upper end edge and/or a lower end edge of the first layered component defines the part of the boundary of the clamping space.

In another embodiment, referring to FIG. 3 and FIG. 4, a second guiding groove 2311 in communication with the entrance from the first layered component 231 is provided on the first layered component 231. An extending direction of the second guiding groove 2311 may be approximately parallel to the axial direction of the heating tube 21. The second guiding groove 2311 may extend from an upper end of the first layered component 231 to a lower end of the first layered component 231, so that the upper end and the lower end of the first layered component 231 are in communication with each other, as shown in FIG. 3; or the second guiding groove 231 may extend from the upper end or the lower end of the first layered component 231, and an extension length of the second guiding groove in the axial direction of the heating tube 21 may be less than an extension length of the first layered component 231 in the axial direction of the heating tube 21, as shown in FIG. 4.

The second guiding groove 2311 includes a first guiding wall and a second guiding wall arranged opposite to each other, the electrical connector 22 located in the clamping space 24 is accommodated between the first guiding wall and the second guiding wall, and after entering the clamping space 24 through the entrance of the clamping space 24, the electrical connector goes deeper into the clamping space 24 in a direction defined by the first guiding wall and the second guiding wall.

In an example, the first guiding wall and the second guiding wall may clamp the electrical connector 22, which is conducive to keeping the electrical connector 22 in the clamping space 24.

In an example, referring to FIG. 5, the electrical connector 22 includes a main body portion 221 and a first abutting portion 2221 and a second abutting portion 2222 extending in the radial direction of the heating tube 21. The main body portion 221 is configured to electrically abut against the heating tube 21, the first abutting portion 2221 and the second abutting portion 2222 are located on two opposite sides of the main body portion 221 and are arranged respectively toward the first guiding wall and the second guiding wall. In a process that the electrical connector 22 goes deep into the clamping space 24, the first abutting portion 2221 and the second abutting portion 2222 may be respectively in sliding contact with the first guiding wall and the second guiding wall, and the cooperation between the first abutting portion 2221 and the second abutting portion 2222 and the first guiding wall and the second guiding wall helps more normalize a track of the electrical connector 22 going deep into the clamping space 24, which helps prevent the electrical connector 22 from being partially embedded between the first layered component 231 and the heating tube 21 due to an unexpected track deviation in the process that the electrical connector 22 goes deep into the clamping space 24 and affecting a stable connection between the first layered component 231 and the heating tube 21, and also helps the efficiency of assembling the electrical connector 22 into the clamping space 24.

In an example, the electrical connector 22 is in clearance fit with the first guiding wall and/or the second guiding wall in the clamping space 24, to reduce resistance that the electrical connector 22 encounters in a process of going deeper into the clamping space 24 in the direction defined by the first guiding wall and the second guiding wall.

Referring to FIG. 5, the electrical connector 22 may further include a hooking portion 223. The hooking portion 223 can prevent the electrical connector 22 from moving along the clamping space 24 or limit an offset of the electrical connector 22 along the clamping space 24. For example, when the electrical connector 22 is partially accommodated in the clamping space 24, in a process of causing the electrical connector 22 to be electrically connected to the power supply assembly 3, the electrical connector 22 is generally pulled or the wire 25 or another conductive element electrically connected to the electrical connector 22 is generally pulled. In this case, the hooking portion 223 is blocked or hooked by another component or member in addition to the hooking portion 223 on the heating assembly 2. In this way, the electrical connector 22 cannot move along the clamping space 24 in a pulling direction, and the hooking portion 223 helps keep the electrical connector 22 at a preset position or limit an offset of the electrical connector 22 along the clamping space 24, which is conducive to preventing a short circuit of the heating assembly 2 or ensuring normal operation of the heating assembly 2.

In an embodiment, the hooking portion 223 can help locate the electrical connector 22, which is conducive to combination of the electrical connector 22 on the heating tube 21 according to the preset position or accommodation of the electrical connector in the clamping space 24. Referring to FIG. 4, since at least a part of the clamping space 24 is blocked by the fixing tube 232, for ease of locating the electrical connector 22, the hooking portion 223 is stopped outside the clamping space 24, so that through the hooking portion 223, an inappropriate position of the electrical connector 22 in the clamping space 24 may be avoided or the electrical connector 22 may be prevented from excessively entering the clamping space 24.

In an embodiment, the hooking portion 223 is hooked in the heating tube 21 or the fixing tube 232, and the hooking portion 223 is hooked through the heating tube 21 or the fixing tube 232, to block the hooking portion 223 from moving along the clamping space 24 in an unexpected case.

Referring to FIG. 2 and FIG. 5, the hooking portion 223 may be integrally formed with the main body portion 221, and the hooking portion 223 may extend from the main body portion 221. The hooking portion 223 may include a first component 2231 extending in the radial direction of the heating tube 21, and the first component 2231 may be perpendicular to the axial direction of the heating tube 21 to form a right-angle hook or incline relative to the axial direction of the heating tube 21 to form an acute-angle hook. The heating tube 21 or the fixing tube 232 abuts against the first component 2231, the first component 2231 is hooked on the heating tube 21 or the fixing tube 232, and the heating tube 21 or the fixing tube 232 can support the first component 2231 in a reverse direction of a direction in which the electrical connector 22 enters the clamping space 24, to stop the electrical connector 22 from moving along the clamping space 24, so that the electrical connector 22 cannot go deeper into the clamping space 24 after reaching a specific depth in the clamping space 24.

In the embodiments shown in FIG. 2 and FIG. 5, the hooking portion 223 further includes a second component 2232 that is bent relative to the first component 2231, the heating tube 21 or the fixing tube 232 is located between the second component 2232 and the main body portion 221, the second component 2232 extends in the axial direction of the heating tube 21, and the second component 2232 can be buckled on the heating tube 21 or the fixing tube 232. The second component 2232 can prevent the first component 2231 from moving toward the heating tube 21 in the radial direction of the heating tube 21, so that it can be ensured that the first component 2231 is abutted and stopped by the heating tube 21 or the fixing tube 232. It should be noted that the second component 2232 is optional rather than mandatory.

Referring to FIG. 2, the hooking portion 223 may be arranged adjacent to the entrance of the clamping space 24, or the hooking portion 223 may be stopped at the entrance of the clamping space 24. That is, the first component 2231 may be stopped and supported by at least a part of a boundary of the entrance of the clamping space 24.

In an embodiment, the entrance of the clamping space is completely defined by the fixing tube, that is, a run-through hole may be provided on a tube wall of the fixing tube, and a part of the electrical connector may pass through the run-through hole. That is, the run-through hole may form the entrance of the clamping space.

In an embodiment, referring to FIG. 2, the entrance of the clamping space 24 is formed at an end portion of the fixing tube 232, so that the end portion of the fixing tube 232 and the heating tube 21 respectively define a part of the entrance of the clamping space 24. The heating assembly 2 may include one or more electrical connectors 22. Based on this, the heating assembly 2 may include one or more clamping spaces 24, and when the entrance of one of the clamping spaces 24 is provided at an upper end of the fixing tube 232, the upper end of the fixing tube 232 or the upper end of the heating tube 21 can support the hooking portion 223 upward, and the wire 25 electrically connected to the electrical connector 22 may pass through a lower end of the clamping space 24. Therefore, when the wire 25 is pulled downward, since the hooking portion 223 is blocked, the electrical connector 22 may be prevented from being pulled to move downward, thereby ensuring that the electrical connector 22 can be stably kept at an original position when the wire 25 is pulled downward.

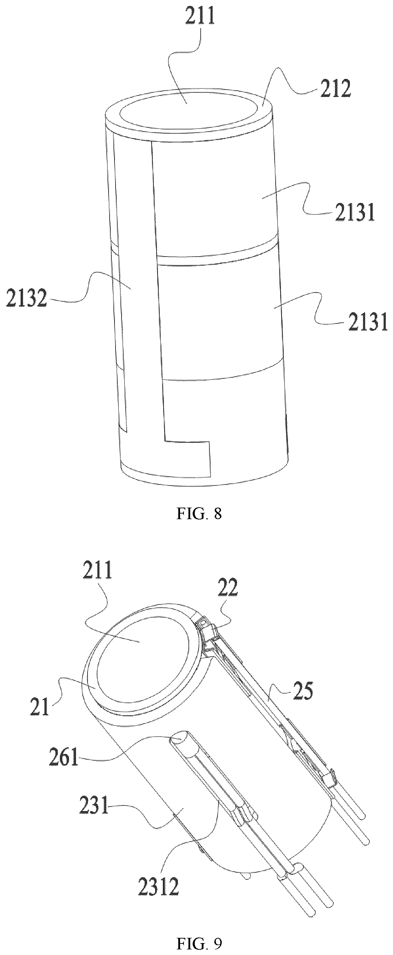

Alternatively, in another embodiment, referring to FIG. 9, the heating assembly 2 further includes an end cover 27. The end cover 27 is connected to the heating tube 21, and may be connected to the upper end of the heating tube 21 or may be connected to the lower end of the heating tube 21. There may be two end covers 27, and the two end covers 27 are respectively connected to the upper end and the lower end of the heating tube 21. The hooking portion 223 is hooked on the end cover 27, and the end cover 27 blocks and supports the hooking portion 223 in the reverse direction of the direction in which the electrical connector 22 enters the clamping space 24.

Alternatively, in another embodiment, a bracket different from the end cover and the fixing tube may be arranged on the heating assembly, and the hooking portion is hooked on the bracket to be stopped and supported, so as to prevent the electrical connector from moving along the clamping space.

The first layered component 231 may be first arranged together with the fixing tube 232 at the periphery of the heating tube 21, to help expose the first position and the second position on the outer surface of the heating tube 21 in the first guiding groove 2312, and ensure that the first layered component 231 forms blocking at a position adjacent to the second position, thereby ensuring that the probe 261 moving along the first guiding groove 2312 can accurately reach the second position.

For ease of sleeving the fixing tube 232 on a periphery of the first layered component 231, an inner diameter of the fixing tube 232 may be greater than or equal to an outer diameter of the first layered component 231, or the fixing tube 232 may be elastic.

When the fixing tube 232 tensions under abutment of the electrical connector 22, at least a part of the first layered component 231 may be close to the heating tube 21, and the fixing tube 232 can prevent the first layered component 231 from rotating relative to the heating tube 21.

The first layered component 231 may include a heat preservation layer made of a heat preservation material. The heat preservation material may include a thermal insulating material, and the thermal insulating material is a material whose thermal conductivity is less than 100 W/m·K and preferably less than 40 W/m·K or 10 W/m·K at 23°C and relative humidity of 50%. For example, the thermal insulating material may be made of at least one of a PAEK-based material, a PI material, or a PBI material, where the PAEK-based material includes a PEEK material, a PEKK material, a PEKEKK material, or a PEK material.

For ease of arrangement of the heat preservation material surrounding the surface of the heating tube 21, the heat preservation material may include a flexible heat preservation material. For example, the heat preservation material may include at least one of thermal insulating silicone, ceramic fiber cloth, or aerogel. In an embodiment of this application, a main component of the heat preservation material is SiO₂ aerogel particles. The SiO₂ aerogel particle is a type of silicon dioxide material of a three-dimensional mesh nanostructure, a porosity of the material is up to 80% to 99.8%, a pore size ranges from 10 nm to 50 nm, air can hardly perform heat conduction in pores of the material, and a thermal conductivity coefficient at normal temperature is down to 0.01 W/(m·K). Therefore, the material has an extremely low thermal conductivity, and the flexible heat preservation layer prepared by using the SiO₂ aerogel particles has an excellent thermal insulating and heat preservation effect.

The heat preservation layer prepared by using the SiO₂ aerogel particles is combined with a polymer material through a special process to form the flexible heat preservation layer, where mass percentage content of the SiO₂ aerogel particles is greater than mass percentage content of the polymer material. The polymer material includes at least one of PU (polyurethane), PTEE (polytetrafluoroethylene), melamine foam, or polymer resin. In an example of this application, the heat preservation material includes PU and SiO₂ aerogel particles, where in terms of mass percentage, mass percentage content of the PU is 10%, mass percentage content of the SiO₂ aerogel particles is 90%, and a thermal conductivity of a heat preservation layer prepared by using the foregoing heat preservation material ranges from 0.01 W/m·K to 0.02 W/m·K. In another example of this application, the heat preservation material includes polymer resin and SiO₂ aerogel particles, where in terms of mass percentage, mass percentage content of the polymer resin ranges from 1% to 30%, mass percentage content of the SiO₂ aerogel particles ranges from 1% to 99%, and a thermal conductivity of a heat preservation layer prepared by using the foregoing heat preservation material ranges from 0.02 W/m·K to 0.026 W/m·K.

The foregoing heat preservation material is drawn into shape and die-cut into a sheet body with a suitable size. In the embodiments of this application, the sheet body is flexible, so that the sheet body can be wrapped and wound on the periphery of the heating tube 21 to form a heat preservation layer with a heat preservation and thermal insulating effect, which has simple and convenient operations. In another optional implementation, the heat preservation material may be drawn into a curved or tubular heat preservation layer, and the heat preservation layer has specific stretching performance, so that the heat preservation layer can be directly sleeved on the periphery of the heating tube 21.

One or more layers of heat preservation layers may be arranged according to a requirement on a heat preservation effect. In an implementation, a single layer of heat preservation layer is arranged, to prevent formation of a gap between layers and loss of heat. A thickness of the heat preservation layer arranged on the outer surface of the heating tube 21 approximately ranges from 0.5 mm to 2 mm. It may be understood that, a larger thickness of the arranged heat preservation layer indicates a better heat preservation effect formed by the heat preservation layer. The thickness of the heat preservation layer arranged on the outer surface of the heating tube 21 may be any value selected from 0.5 mm to 2 mm according to the requirement on the heat preservation effect.

The heat preservation layer surrounds in the circumferential direction of the heating tube 21, and in an implementation, the heat preservation layer is wrapped and wound on most of the outer surface of the heating tube 21. Since the heat preservation layer is configured into a sheet body, after the single layer of heat preservation layer is wound on the outer surface of the heating tube 21, the heat preservation layer needs to be fixed, so that the heat preservation layer can be kept on the outer surface of the heating tube 21. For ease of operations, a back adhesive may be arranged on a surface of the heat preservation layer facing the heating tube 21, and the heat preservation layer is adhered to the outer surface of the heating tube 21 through the back adhesive. When a plurality of layers of heat preservation layers are configured, the heat preservation layer and the outer surface of the heating tube 21 and heat preservation layers on two adjacent sides may all be adhered by using the back adhesive. It should be noted that the heat preservation layer may alternatively be fixed to the heating tube 21 in another manner, which is not listed one by one in this application.

The fixing tube 232 in any one of the foregoing embodiments may be prepared by using a high-temperature-resistant PEEK (polyetheretherketone) material, and in a preferred implementation of this application, the fixing tube 232 may be a PI (polyimide) tube, which is a thin-wall tube formed by stretching a pyromellitic polyimide thin film, has a thin thickness and a light weight, and is conducive to miniaturization and lightweighting designs of the entire heating assembly.

In an embodiment, referring to FIG. 10, the heating assembly further includes an end cover 27 connected to an end portion of the heating tube 21, an anti-retraction portion is arranged on the end cover 27, and the anti-retraction portion herein is referred to as a third anti-retraction portion.

Specifically, the anti-retraction portion may include a second through hole provided on the end cover 27, the conductive pin 262 passes through the second through hole, and the conductive pin 262 includes a bending at a position adjacent to the second through hole, where the bending may be referred to as a third bending 2622. The third bending 2622 is located between the second through hole and the probe 261, and the second through hole is configured to prevent the third bending 2622 from passing through, to prevent displacement of the probe 261 when the conductive pin 262 is pulled.

The third bending 2622 is arranged adjacent to the end cover 27, and the "adjacent to" includes being in contact with or being close to but not in contact with.

In an example, due to the third bending portion 2622, the conductive pin 262 includes a second step, and the end cover 27 defining the second through hole supports the second step. Since the second step is in contact with and supported by the end cover 27 defining the second through hole, when the conductive pin 262 is pulled on one side of the second through hole, the conductive pin 262 located on another side of the second through hole may almost not move. That is, the second through hole can prevent the conductive pin 262 from retreating and prevent the probe 261 from being moved from the second position.

In an example, the third bending 2622 is arranged adjacent to the second through hole but a specific gap exists between the third bending and the third through hole. When the conductive pin 262 is pulled, the third bending 2622 may be deformed to reduce a bending degree of the third bending, so that the conductive pin 262 can provide a retreat margin to enable a part of conductive pin 262 away from the probe 261 to retreat, and a part of the conductive pin adjacent to the probe 261 can basically remain static. Therefore, when the conductive pin 262 is pulled, a position of the probe 261 may remain unchanged.

Therefore, when the conductive pin 262 is pulled in a process of connecting the conductive pin 262 to the control board 31, the third bending portion 2622 may prevent the probe 261 of the temperature measurement element 26 from deviating from the second position.

In an embodiment, the conductive pin 262 may include the first bending portion and at least one of the second bending 2621 and the third bending 2622 simultaneously. In an embodiment, the first bending portion and the second bending 2621 may be combined into one bending portion. In an embodiment, the conductive pin 262 may further include another bending different from the first bending portion, the second bending 2621, and the third bending 2622, and the another bending is also configured to prevent the temperature measurement element 26 from moving along the first guiding groove 2311.

In an embodiment, the anti-retraction portion includes a first anti-retraction portion and a second anti-retraction portion, the conductive pin 262 connects the first anti-retraction portion and the second anti-retraction portion, and a geometric connection line between the first anti-retraction portion and the second anti-retraction portion inclines relative to the axial direction of the heating tube 21. For example, the first through hole 2321 and the second through hole are respectively the first anti-retraction portion and the second anti-retraction portion, and a geometric connection line between the first through hole 2321 and the second through hole inclines relative to the axial direction of the heating tube 21, to further prevent the probe 261 from deviating from the second position when the conductive pin 262 is pulled.

In an embodiment, a part of the conductive pin 262 is wound into a helical structure similar to a spring, so that when the conductive pin 262 is pulled, the helical structure can provide an extension margin to reduce a pulling force to the probe 261.

In an embodiment, referring to FIG. 3 and FIG. 4, the electrical connector 22 includes a main body portion 221 and an abutting portion 222 extending from the main body portion 221 in the radial direction of the heating tube 21, and further includes a wire 25, where the main body portion 221 electrically abuts against the heating tube 21, and the abutting portion 222 abuts against the fixing tube 232. Under an action of the abutting portion 222, a gap exists between the main body portion 221 and the fixing tube 232, the wire 25 is electrically connected to the main body portion 221, at least a part of the wire 25 is accommodated in the gap between the fixing tube 232 and the main body portion 221, and the main body portion 221 is electrically connected to the power supply assembly 3 through the wire 25.

More specifically, referring to FIG. 4, the main body portion 221 may include an elastic piece 2212 and a connecting portion 2211 electrically connected to the wire 25. The wire 25 may be electrically connected to the connecting portion 2211 through welding. The main body portion 221 elastically abuts against the heating tube 21 through the elastic piece 2212, to ensure a stable electrical connection between the main body portion 221 and the heating tube 21. In the example shown in FIG. 4, the elastic piece 2212 includes an elastic arm A constructed into V-shaped and an electrical contact B arranged at a V-shaped corner of the elastic arm A, where the electrical contact B protrudes out toward the heating tube 21, so that the elastic arm A provides an elastic force for the electrical contact B to electrically abut against the heating tube 21.

In an embodiment, there is only one induction coil or electric heating element 213 on the heating tube 21, so that there may be at least two electrical connectors 22, where one is a positive electrical connector, and the other is a negative electrical connector. The positive electrical connector and the negative electrical connector are respectively electrically connected to two opposite ends of the induction coil or the electric heating element 213. Based on this, in an example, there are two second guiding grooves 2311 that are independent of each other and not in communication with each other on the first layered component 231, and the positive electrical connector and the negative electrical connector are respectively arranged in different second guiding grooves 2311. In another example, there is a second guiding groove 2311 running through the upper end and the lower end of the first layered component 231 on the first layered component 231, and the positive electrical connector and the negative electrical connector are respectively inserted into the second guiding groove 2311 from top to bottom and from bottom to top and are respectively located on an upper side and a lower side of the second guiding groove 2311.

In an embodiment, referring to FIG. 3, FIG. 7, and FIG. 8, there are a plurality of induction coils or electric heating elements 213 on the heating tube 21, so that there may be at least three electrical connectors 22, where one electrical connector 22 may be a public electrical connector and can be electrically connected to the plurality of induction coils or electric heating elements 213 simultaneously, the rest electrical connectors 22 are electrically connected to the plurality of induction coils or electric heating elements 213 in a one-to-one correspondence manner, and a quantity of second guiding grooves 2311 on the first layered component 231 is not greater than a quantity of the electrical connectors 22. For example, as shown in FIG. 3, FIG. 7, and FIG. 8, there are two induction coils or electric heating elements 213 on the heating tube 21, there may be three electrical connectors 22, and there may be two second guiding grooves 2311 on the first layered component 231, where one second guiding groove is a long second guiding groove running through the upper end and the lower end of the first layered component 231, and the other second guiding groove may be a short second guiding groove. The short second guiding groove and the long second guiding groove are independent of each other, the two electrical connectors 22 are respectively arranged on an upper side and a lower side of the long second guiding groove, a public electrical connector is arranged in the short second guiding groove, and an extension length of the short second guiding groove in the axial direction of the heating tube 21 is less than an extension length of the long second guiding groove in the axial direction of the heating tube 21.

When a first electrical connector and a second electrical connector are arranged in the same first guiding groove 2311 simultaneously and the first electrical connector is arranged above the second electrical connector, arrangement of the hooking portion 232 on the first electrical connector can prevent, when the wire 25 connected to the first electrical connector is pulled downward, the first electrical connector from further going deep into the clamping space 24, leading to a short circuit caused by contact between the first electrical connector and the second electrical connector.

When the electric heating element 213 includes a first electric heating element and a second electric heating element arranged on upper and lower sides, the first electric heating element is electrically connected to the first electrical connector, the second electric heating element is electrically connected to the second electrical connector, the first electric heating element is located above the second electric heating element, and at least a part of the first electric heating element and at least a part of the second electric heating element are exposed in the same first guiding groove 2311 simultaneously, arrangement of the hooking portion 232 on the first electrical connector can prevent, when the wire 25 connected to the first electrical connector is pulled downward, the first electrical connector from further going deep into the clamping space 24, leading to abnormal operation of the heating assembly 2 since the first electrical connector is electrically connected to the first electric heating element and the second electric heating element simultaneously.

In the foregoing heating assembly and the aerosol generating device, the bending portion is formed on the conductive pin, and the anti-retraction portion can stop the bending portion, so that when the conductive pin is pulled, through coordination and cooperation between the anti-retraction portion and the bending portion, the probe can be prevented from moving, thereby ensuring that the probe can be kept at a preset temperature detection position.

### Embodiment 2:

An embodiment of this application further provides an aerosol generating device configured to be driven by electrical power. As shown in FIG. 13, the aerosol generating device includes a heating device 4 and a power supply assembly 3, the power supply assembly 3 provides electrical power to the heating device 4, the heating device 4 encloses to form a heating cavity with an open end portion, an aerosol-forming substrate is removably accommodated in the heating cavity, and the aerosol-forming substrate is baked and heated by the heating device than being burnt, so that some components of the aerosol-forming substrate is volatilized to form aerosols. The aerosol-forming substrate includes a cigarette that is approximately rod-shaped, and the cigarette includes tobacco products, so that a requirement of a user for nicotine is met.

The heating device and the power supply assembly are accommodated in a housing to form a whole. The housing is formed by assembling a plurality of sub-housings, and a connection manner between the sub-housings may be set to a detachable or non-detachable connection. An insertion opening is provided at an end of the housing, and the aerosol-forming substrate is inserted into the heating cavity through the insertion opening.

The power supply assembly 3 mainly includes a rechargeable lithium-ion battery, a charging interface is provided at another end of the housing, and the battery is charged by an external power supply. Further, the power supply assembly 3 generally further includes a control board, and the control board is connected to the heating device, the battery, and other electronic elements in the aerosol generating device.

The aerosol generating device further includes a switch, and the switch may be selected from at least one of a key switch, a touch switch, or an airflow sensing switch. The switch is connected to the control board, and after the switch is started, the control board controls the battery assembly to provide electrical power to the heating device.

An MCU (microcontroller unit) is generally further arranged on the control board of the aerosol generating device, and the MCU is electrically connected to a heating assembly of the heating device. The MCU includes a temperature measurement feedback loop and a temperature control feedback loop, the temperature measurement feedback loop includes a temperature measurement element located in the heating device, the temperature measurement element is arranged close to or attached to a heating element in the heating device, the temperature measurement element feeds a temperature of the heating element to the MCU in real time, and the MCU further controls the heating element through the temperature control feedback loop, so that the heating element can heat the aerosol-forming substrate at suitable heating power according to a predetermined degree.

Therefore, stable aerosols suitable for inhalation are further generated, to meet inhalation experience of the user. The aerosols suitable for inhalation may be defined as that in a process that the user smokes a cigarette for inhalation, the aerosols generated by the aerosol-forming substrate have a suitable temperature, and the temperature basically remains unchanged in the whole process. Even if the user interrupts an inhalation action in an inhalation process, after the aerosol generating device is started again, the aerosol generating device can control the heating device to perform heating at suitable heating power, so that the aerosols formed through heating of the heating device keep flavors and inhalation temperatures that are approximately the same, further improving user experience.

A core component of the heating device 4 is the heating assembly, and in an embodiment of this application, the heating assembly is configured as a circumferentially heating heating assembly. That is, the heating assembly encloses to form a heating cavity 41, at least a part of the heating cavity 41 is configured to accommodate the aerosol-forming substrate, and the heating element of the heating assembly circumferentially heats the aerosol-forming substrate. The circumferentially heating heating assembly may include one or more of an infrared heating assembly, a resistive heating tube assembly, or an electromagnetic induction heating tube assembly. In an optional embodiment, a central heating element may be configured in the heating cavity in the circumferentially heating heating assembly, to enhance a heating effect. The resistive heating tube and the electromagnetic induction heating tube may be arranged into any form in the related art. This is not specifically limited in this application.

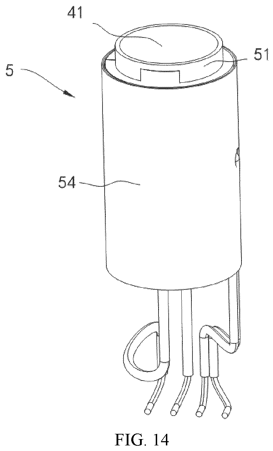

An embodiment of this application provides an infrared heating assembly 5. As shown in FIG. 14, the infrared heating assembly 5 includes an infrared heating element 51, the infrared heating element 51 includes a base body, the base body is approximately constructed into a hollow tubular structure, an inner cavity of the base body defines a heating cavity 41, and at least a part of the heating cavity 41 is configured to accommodate an aerosol-forming substrate. In another optional example, the base body may alternatively be constructed into a hollow prism-shaped structure, and a size of the inner cavity of the base body is constructed for ease of insertion and removal of the aerosol-forming substrate.

The base body of the infrared heating element 51 is prepared by using a material with a high infrared ray transmittance. In a preferred implementation, the infrared ray transmittance of the high-temperature-resistant material is 95% or higher, and a suitable high-temperature-resistant material may be selected from materials such as quartz glass, ceramic, or mica. In an example of this application, the base body is prepared by using a transparent quartz glass material.

The infrared heating element 51 further includes an infrared electrothermal coating 511 formed on a surface of the base body. The infrared electrothermal coating 511 may be formed on an outer surface of the base body or may be formed on an inner surface of the base body. The infrared electrothermal coating 511 generates heat with supplied electric power, and further generates an infrared ray with a specific wavelength, where the wavelength approximately ranges from 8 µm to 15 µm. When the wavelength of the infrared ray matches an absorption wavelength of the aerosol-forming substrate, the aerosol-forming substrate absorbs the infrared ray, and molecules and atoms in the aerosol-forming substrate resonate, namely, generate intensive vibration and rotation, and a temperature of the aerosol-forming substrate is increased due to the vibration and rotation, to achieve a heating function.

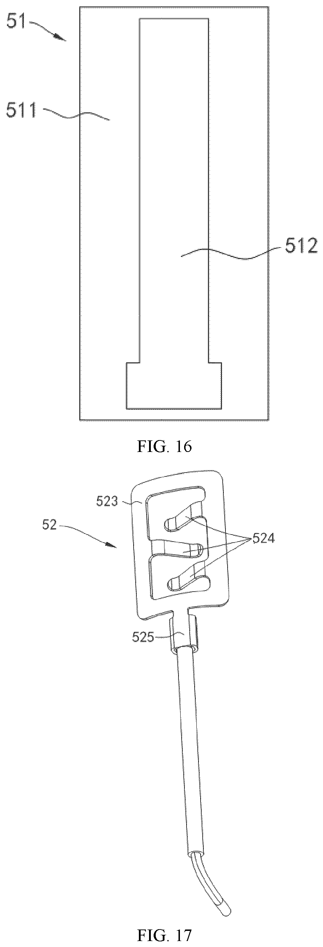

In an embodiment of this application, as shown in FIG. 17, the infrared coating is formed on the outer surface of the base body, the outer surface of the base body includes an infrared electrothermal coating region 21 and a non-infrared electrothermal coating region, where a conductive coating is set as a non-infrared coating, the conductive coating may be a metal coating or a conductive tape, and the metal coating may include silver, gold, palladium, platinum, copper, nickel, molybdenum, tungsten, niobium, or an alloy material of the foregoing metal. The conductive coating is configured as conductive cloth 512 of the infrared heating assembly 5. In an example of this application, the infrared heating assembly 5 includes two conductive coating regions, the two conductive coating regions are symmetrically arranged, and the infrared coating extends between the two conductive coating regions. The two conductive coating regions respectively correspond to a first conductive portion and a second conductive portion of the infrared heating assembly 5, and the two conductive coatings are at least partially electrically connected to the infrared electrothermal coating, so that a current can flow from the first conductive portion to the second conductive portion through the infrared coating.

The infrared heating assembly 5 further includes an electrical connector 52, and the electrical connector 52 is configured to connect a conductive portion of the infrared heating element 51 and the power supply assembly. In an example of this application, the electrical connector 52 includes a first electrical connector 521 and a second electrical connector 522, the first electrical connector 521 is in a conductive connection to a first conductive portion of the infrared heating element 51, and the second electrical connector 522 is in a conductive connection to a second conductive portion of the infrared heating element 51.

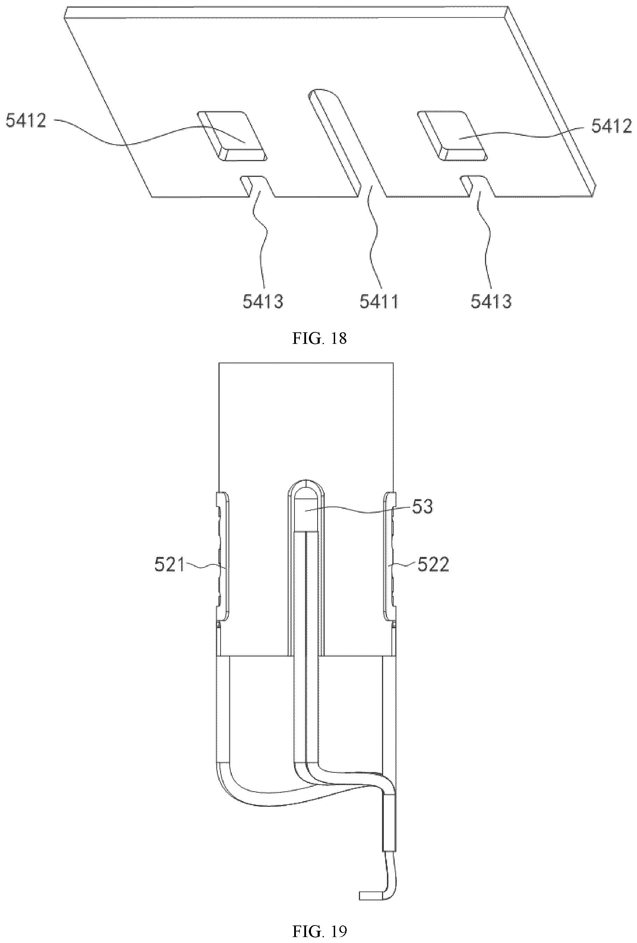

In an example of this application, as shown in FIG. 18, the electrical connector 52 is approximately configured into a form of a metal elastic piece. The electrical connector 52 includes a main body portion 523, a conductive contact sheet 524, and an extending portion 525. The main body portion 523 is a hollow square plate enclosed by four cantilevers, and a plurality of conductive contact sheets 524 are bent toward the conductive coating region of the infrared heating element 51 and the plurality of conductive contact sheets 524 remain in an electrical contact connection to the first conductive portion and the second conductive portion of the infrared heating element 51. As shown in FIG. 18, in an example of this application, three conductive contact sheets 524 are connected to an inner side of the main body portion 523, where two conductive contact sheets 524 are located on the same side of the main body portion, and the remaining one conductive contact sheet 524 is located on another side of the main body portion 523. By arranging the conductive contact sheet 524 into a claw structure, a stable electrical connection may be formed between the conductive contact sheet 524 of the electrical connector 52 and the conductive cloth 512 of the infrared heating element 51, so that an unstable electrical connection between a common electrical connector 52 and the conductive portion of the infrared heating element 51 can be effectively avoided. In another optional example, the electrical connector 52 may alternatively be configured into a welding wire or another form.

The infrared heating assembly 5 further includes a temperature measurement element 53, and the temperature measurement element 53 is configured to sense a temperature of the infrared heating element 51. In an example of this application, the temperature measurement element 53 is configured as a thermistor temperature detector. A thermistor includes a thermistor chip and two conductive pins, and the two conductive pins are respectively connected to two electrodes of the thermistor chip. At least a part of the thermistor chip and the two conductive pins are encapsulated in an outer shell to form the thermistor temperature detector. The two conductive pins are electrically connected to the control board of the power supply assembly, to transmit temperature information to the control board of the power supply assembly, and the control board further controls, according to the real-time temperature information of the infrared heating element 51 measured by the thermistor temperature detector, an amount of electric power provided by a battery to the infrared heating element 51.

Temperatures at different positions of the outer surface of the tubular infrared heating element 51 are different. For example, temperatures at two end portions of the tubular infrared heating element 51 are lower than a temperature at a middle position of the tubular base body. Therefore, when a position of the thermistor temperature detector fixed to the outer surface of the infrared heating element 51 changes, a temperature measured by the thermistor temperature detector changes, so that it is crucial for a temperature measurement effect of the thermistor temperature detector when the thermistor temperature detector is fixed to a position relative to the infrared heating element 51.

**In** the circumferentially heating assembly, the temperature measurement element 53 is generally fixed to the outer surface and/or an inner surface of the infrared heating element 51, and the temperature measurement element 53 is configured to be kept at a fixed position relative to the infrared heating element 51, so that in a heating process of the infrared heating element 51, the temperature measurement element 53 can accurately collect a heating temperature of the infrared heating element 51. In an embodiment of this application, the temperature measurement element 53 is fixed to the outer surface of the infrared heating element 51, and for ease of fixing the temperature measurement element 53, the heating assembly 300 further includes a support member 54, where the support member 54 includes a clamping structure, and the temperature measurement element 53 is fixed through the clamping structure, so that positions of the temperature measurement element 53 and the infrared heating element 51 remain stable.

To prevent the support member from absorbing heat generated by the infrared heating element 51, in an embodiment of this application, the support member 54 includes a layered component 541, the layered component 541 is constructed and arranged into a part surrounding the tubular infrared heating element 51 in a length direction, and the layered component 541 is prepared by using a heat preservation material. Therefore, the heat generated by the infrared heating element 51 is wrapped by the layered component 541, to further prevent the heat generated by the infrared heating element 51 from being transmitted to the outside.

The heat preservation material includes at least one of thermal insulating silicone, ceramic fiber cloth, or aerogel. In an embodiment of this application, a main component of the heat preservation material for preparing the layered component 541 is SiO₂ aerogel particles. The SiO₂ aerogel particle is a type of silicon dioxide material of a three-dimensional mesh nanostructure, a porosity of the material is up to 80% to 99.8%, a pore size ranges from 10 nm to 50 nm, air can hardly perform heat conduction in pores of the material, and a thermal conductivity coefficient at normal temperature is down to 0.01 W/(m·K). Therefore, the material has an extremely low thermal conductivity, and the flexible layered component 541 prepared by using the SiO₂ aerogel particles has an excellent thermal insulating and heat preservation effect.

The heat preservation material prepared by using the SiO₂ aerogel particles is combined with a polymer material through a special process to form the flexible layered component 541, where mass percentage content of the SiO₂ aerogel particles is greater than mass percentage content of the polymer material. The polymer material includes at least one of PU (polyurethane), PTEE (polytetrafluoroethylene), melamine foam, or polymer resin. In an example of this application, the layered component 541 includes PU and SiO₂ aerogel particles, where in terms of mass percentage, mass percentage content of the PU is 10%, mass percentage content of the SiO₂ aerogel particles is 90%, and a thermal conductivity of a layered component 541 prepared by using the foregoing heat preservation material ranges from 0.01 W/(m·K) to 0.02 W/(m·K). In another example of this application, the layered component 541 includes polymer resin and SiO₂ aerogel particles, where in terms of mass percentage, mass percentage content of the polymer resin ranges from 1% to 30%, mass percentage content of the SiO₂ aerogel particles ranges from 1% to 99%, and a thermal conductivity of a layered component 541 prepared by using the foregoing heat preservation material ranges from 0.02 W/(m·K) to 0.026 W/(m·K).

The foregoing heat preservation material is drawn into shape and die-cut into a sheet body with a suitable size. In the embodiments of this application, the sheet body is flexible, so that the sheet body can be wrapped and wound on a periphery of the infrared heating element 51 to form a layered component 541 with a heat preservation and thermal insulating effect, which has simple and convenient operations. In another optional implementation, the heat preservation material may be drawn into a curved or tubular layered component 541, and the layered component 541 has specific stretching performance, so that the layered component 541 can be directly sleeved on the periphery of the tubular infrared heating element 51.

One or more layers of layered components 541 may be arranged according to a requirement on a heat preservation effect. In a preferred implementation, a single layer of layered component 541 is arranged, to prevent formation of a gap between layers and loss of heat. A thickness of the layered component 541 arranged on the outer surface of the infrared heating element 51 approximately ranges from 0.5 mm to 2 mm. It may be understood that, a larger thickness of the arranged layered component 541 indicates a better heat preservation effect formed by the layered component 541. The thickness of the layered component 541 arranged on the outer surface of the infrared heating element 51 may be any value selected from 0.5 mm to 2 mm according to the requirement on the heat preservation effect.

The layered component 541 is wound in the length direction of the infrared heating element 51. In a preferred implementation, the layered component 541 is wrapped and wound on most of the outer surface of the infrared heating element 51, and only a partial outer surface of a first end of the infrared heating element 51 is reserved, to help fix an end portion of the heating assembly. Since the layered component 541 is configured into a sheet body, after a single layer of layered component 541 is wound on the outer surface of the infrared heating element 51, two free ends of the layered component 541 need to be fixed, and for ease of operations, the two free ends of the layered component 541 may be fixed through high-temperature adhesive paper. When a plurality of layers of layered components 541 are arranged, one free end of each layered component 541 after winding may also be fixed through high-temperate adhesive paper.

In the embodiments of this application, to prevent the layered component 541 from rotating on the outer surface of the tubular infrared heating element 51, the support member 54 further includes a fixing tube 542 sleeved on a periphery of the layered component 541, and the fixing tube 542 circumferentially wraps at least a part of the outer surface of the layered component 541. The layered component 541 is prepared by using aerogel, so that the layered component 541 includes a large surface friction coefficient, and the outer surface of the layered component 541 is further wrapped by the fixing tube 542. Therefore, the layered component 541 can hardly rotate on the outer surface of the infrared heating element 51.

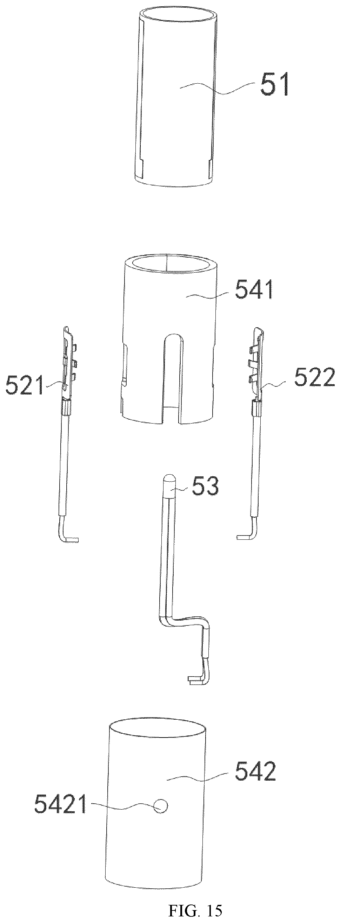

In an example of this application, as shown in FIG. 18, an opening 511 is provided on the layered component 541, where a shape of the opening 511 is approximately the same as a shape of the temperature measurement element 53, and the opening 511 extends from one side of the layered component 541 and ends at a middle position of the layered component 541. The opening 511 is configured to accommodate the temperature measurement element 53, and the temperature measurement element 53 is placed in the opening 511 and remains in contact with the outer surface of the infrared heating element 51. As shown in FIG. 15 and FIG. 18, the temperature measurement element 53 is approximately in a shape of an elongated strip, and the opening 511 correspondingly provided on the layered component 541 is configured in a shape of U. If the shape of the temperature measurement element 53 changes, the shape of the opening 511 correspondingly provided on the layered component 541 changes accordingly.

The layered component 541 may be fixed to the periphery of the infrared heating element 51 through high-temperature adhesive paper, the temperature measurement element 53 is accommodated in the opening 511 of the layered component 541, and the temperature measurement element 53 may also be fixed through high-temperature adhesive paper. To prevent the temperature measurement element 53 from generating displacement relative to the infrared heating element 51 due to insecure fixing, in an embodiment of this application, the support member 54 further includes a fixing tube 542 sleeved on the periphery of the layered component 541, and the fixing tube 542 closes an outer opening of the opening 511 on the layered component 541, so that the temperature measurement element 53 is clamped between the infrared heating element 51 and the fixing tube 542. The fixing tube 542 is approximately in a shape of a tube, a longitudinal extension length of the fixing tube is approximately the same as a longitudinal extension length of the layered component 541, or a longitudinal extension length of the fixing tube 542 is slightly greater than a longitudinal extension length of the layered component 541, so that the fixing tube 542 can circumferentially wrap the layered component 541 more strongly.

The fixing tube 542 may be prepared by using a high-temperature-resistant PEEK (polyetheretherketone) material, and in a preferred implementation of this application, the fixing tube 542 may be a PI (polyimide) tube, which is a thin-wall tube formed by stretching a pyromellitic polyimide thin film, has a thin thickness and a light weight, and is conducive to miniaturization and lightweighting designs of the entire heating assembly.

After the fixing tube 542 is sleeved on the layered component 541, a longitudinal opening 5411 is provided on the layered component 541, so that an accommodating cavity with a lower end opening 511 is formed between the infrared heating element 51 and the fixing tube 542, and the temperature measurement element 53 may be inserted and clamped between the infrared heating element 51 and the fixing tube 542 from the lower end opening of the accommodating cavity.

In a preferred implementation, the longitudinal opening 5411 on the layered component 541 ends at the middle position of the infrared heating element 51, so that a temperature measurement probe of the temperature measurement element 53 is located at the middle position of the infrared heating element 51, thereby improving the accuracy of a temperature measurement result of the temperature measurement element 53.

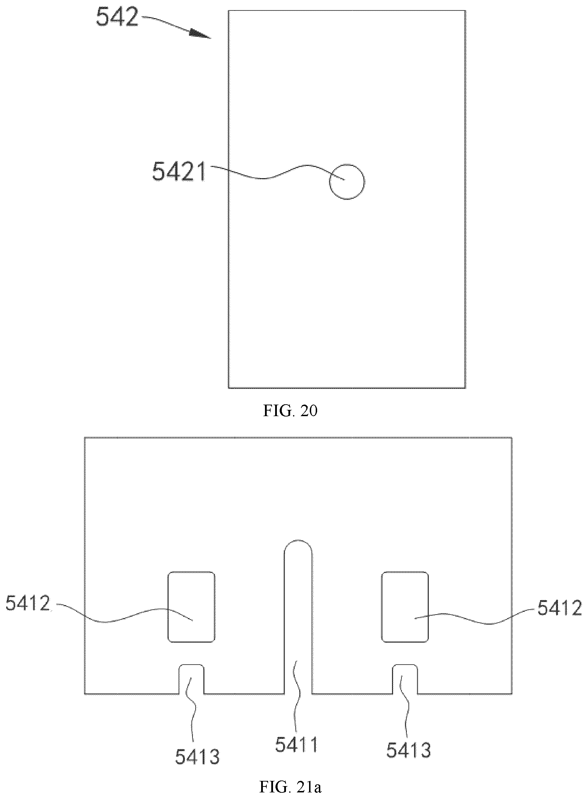

Further, since the fixing tube 542 blocks a lateral opening of the opening 511 on the layered component 541, in a process of mounting the temperature measurement element 53, whether the temperature measurement element 53 is mounted in place cannot be directly observed. To prevent over-mounting of an operator, as shown in FIG. 20, a fixing hole 5421 is provided on the fixing tube 542, the fixing hole 5421 corresponds to an end of the opening 511 of the layered component 541, and in a process of inserting the temperature measurement element 53 from the lower end opening of the opening 511, the operator may recognize whether the temperature measurement probe of the temperature measurement element 53 is mounted in place through the fixing hole 5421 on the fixing tube 542. When the temperature measurement probe of the temperature measurement element 53 is exposed through the fixing hole 5421, the operator can recognize that the temperature measurement element 53 has been basically mounted in place. In addition, the temperature measurement probe of the temperature measurement element 53 is arranged protruding relative to a lead wire, so that the temperature measurement probe can be clamped in the fixing hole 5421 of the fixing tube 542, which is conducive to fixing of the temperature measurement element 53.

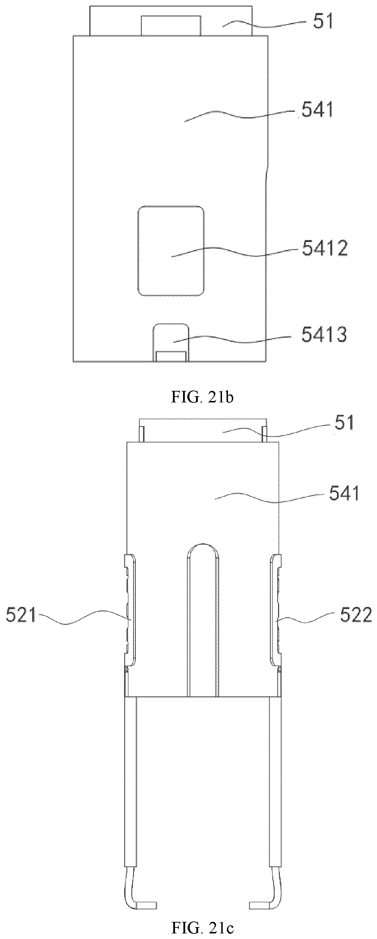

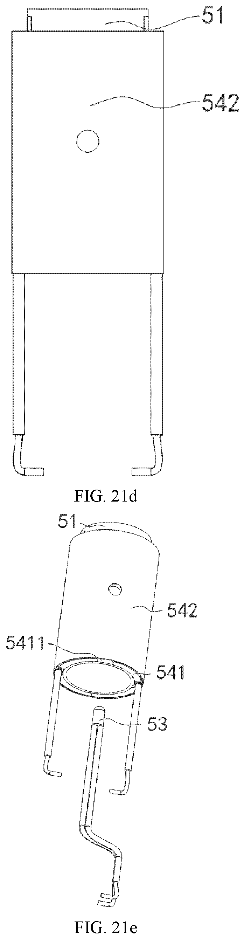

This application further provides a mounting method applicable to the foregoing heating assembly, including the following steps:
First: Winding a sheet-like layered component 541 on a periphery of an infrared heating element 51, where two free ends of the layered component 541 are fixed through high-temperature adhesive paper, as shown in FIG. 21a and FIG. 21b.
Second: Sleeving a fixing tube 542 on a periphery of the layered component 541, as shown in FIG. 21d.
Third: Inserting a temperature measurement element 53 from a lower end opening of the foregoing assembly until the temperature measurement element 53 is clamped in a fixing hole 5421 of the fixing tube 542, as shown in FIG. 21e.

In an embodiment of this application, the support member 54 is further provided with a fixing structure of the electrical connector 52. As shown in FIG. 17, the main body portion 523 of the electrical connector 52 is approximately in a shape of a hollow plate, a first hole 5412 is provided on the layered component 541, the main body portion 523 of the electrical connector 52 is placed on the first hole 5412, an outer surface of the main body portion 523 of the electrical connector 52 is attached to the outer surface of the layered component 541, and the plurality of conductive contact sheets of the electrical connector 52 are bent toward the inside of the first hole 5412, so that a tail end of each conductive contact sheet is in contact with the conductive portion of the infrared heating element 51 to form an electrical connection, where the first hole 5412 is provided at a position corresponding to the conductive coating region of the infrared heating element 51, that is, the conductive portion of the infrared heating element 51.

In an example of this application, two conductive coating regions are symmetrically arranged on the infrared heating element 51, which correspond to the first conductive portion and the second conductive portion of the infrared heating element 51, two first holes 5412 are provided on the layered component 541, where the two first holes 5412 respectively correspond to positions of the two conductive coating regions, and two electrical connectors 52 are arranged correspondingly, where the two electrical connectors 52 are respectively arranged on outer surfaces of the two first holes 5412, so that the conductive contact sheets on the two electrical connectors 52 are respectively accommodated in the first holes 5412 and the tail end of each conductive contact sheet is in contact with the conductive portion of the infrared heating element 51.

In a preferred implementation, as shown in FIG. 17, the main body portion 523 of the electrical connector 52 is configured into a curved plate-shaped structure, so that the main body portion 523 of the electrical connector 52 can be stably attached to the layered component 541. In addition, the conductive contact sheet arranged on the electrical connector 52 is configured into a curved claw structure, so that the conductive contact sheet forms a holding force on the conductive coating of the infrared heating element 51, and the electrical connector 52 can be stably placed on the layered component 541. Further, three conductive contact sheets 524 are respectively arranged on two opposite inner sides of the main body portion 523 of the electrical connector 52, one conductive contact sheet 524 is arranged on one inner side of the main body portion 523, and two conductive contact sheets 524 are arranged on another inner side of the main body portion 523. One of the three conductive contact sheets 524 is arranged at a middle position of the inner side, and the remaining two conductive contact sheets 524 are respectively arranged at two end positions of the other inner side, so that the three conductive contact sheets 524 can be stably clamped on the layered component 541.

The fixing tube 542 is further sleeved on the outer surface of the layered component 541, so that the main body portion 523 of the electrical connector 52 is further clamped between the layered component 541 and the fixing tube 542, the electrical connector 52 can be stably fixed, and the conductive contact sheet of the electrical connector 52 can be stably electrically connected to the conductive portion of the infrared heating element 51.

An extending portion 525 is further arranged at a lower end of the electrical connector 52, and a wire is electrically connected to the extending portion 525. A notch 5413 is further provided on a lower side of the layered component 541, and the extending portion 525 of the electrical connector 52 and at least a part of the wire are at least partially accommodated in the notch 5413. After the extending portion 525 of the electrical connector 52 and the wire are accommodated in the notch 5413, the electrical connector 52 is basically attached to the outer surface of the layered component 541, facilitating sleeving of the fixing tube 542.

In an example of this application, the temperature measurement element 53 is fixed between two electrical connectors 52, so that the opening 511 of the layered component 541 is located between two first holes 5412, as shown in FIG. 18 and FIG. 19.

An embodiment of this application further provides a mounting method suitable for mounting the foregoing heating assembly, as shown in FIG. 21a to FIG. 9b, and the method includes the following steps:
First: Winding a sheet-like layered component 541 on a periphery of an infrared heating element 51, where two free ends of the layered component 541 are fixed through high-temperature adhesive paper, as shown in FIG. 21a and FIG. 9b.
Second: Placing two electrical connectors 52 respectively corresponding to two first holes 5412 of the layered component 541, as shown in FIG. 21c.
Third: Sleeving a fixing tube 542 on a periphery of the layered component 541, as shown in FIG. 21d.
Fourth: Inserting a temperature measurement element 53 from a lower end opening of the foregoing assembly until the temperature measurement element 53 is clamped in a fixing hole 5421 of the fixing tube 542, as shown in FIG. 21e.

In the foregoing embodiments, an infrared heating assembly is used as an example to describe in detail a fixing manner of the temperature measurement element 53 and the electrical connector of the heating assembly, where the support member 54 supporting the temperature measurement element 53 and the electrical connector 52 includes the layered component 541 having a heat preservation effect, so that a problem that a common support member 54 absorbs the heat generated by the infrared heating element 51 can be effectively prevented.

In addition, the support member 54 further includes the fixing tube 542, and since the layered component 541 is prepared by using an aerogel material, a large friction force exists between the outer surface of the layered component 541 and the fixing tube 542 and between the layered component 541 and the infrared heating element 51, so that the layered component 541 can be effectively prevented from rotating, thereby fixing the temperature measurement element 53 and the electrical connector 52 more firmly. In another optional example, the structure of the support member 54 and the fixing manner are also applicable to a tubular resistive heating tube and an electromagnetic induction heating tube.

It should be noted that, the specification of this application and the accompanying drawings thereof illustrate preferred embodiments of this application, but this application is not limited to the embodiments described in the specification. Further, a person of ordinary skill in the art may make improvements or variations according to the foregoing description, and such improvements and variations shall all fall within the protection scope of the appended claims of this application.

## Claims

1. A heating assembly, configured to heat an aerosol-forming substrate to generate aerosols, and comprising:
a tubular heating element, wherein the heating element encloses to form a heating cavity, and at least a part of the heating cavity is configured to accommodate the aerosol-forming substrate;
a temperature measurement element, configured to sense a temperature of the heating element; and
a support member, wherein
the support member comprises a layered component prepared by using a heat preservation material, and the layered component is configured to surround at least a part of a length of the heating element; and
a clamping structure is arranged on the support member, and the clamping structure is configured to fix the temperature measurement element.

2. The heating assembly according to claim 1, wherein the heat preservation material comprises at least one of aerogel, silicone, or ceramic fiber cloth.

3. The heating assembly according to claim 2, wherein the aerogel comprises a polymer material and SiO₂ aerogel particles.

4. The heating assembly according to claim 3, wherein the polymer material comprises at least one of PU, PTFE, melamine foam, or polymer resin.

5. The heating assembly according to claim 1, wherein the layered component is flexible and capable of being wound on a periphery of the heating element.

6. The heating assembly according to claim 5, wherein two free ends of the layered component are fixed through high-temperature adhesive paper.

7. The heating assembly according to claim 3, wherein a thickness of the layered component approximately ranges from 0.5 mm to 2 mm.

8. The heating assembly according to claim 1, wherein the support member further comprises a fixing tube arranged outside the layered component, and the fixing tube is configured to circumferentially wrap at least a part of an outer surface of the layered component.

9. The heating assembly according to claim 8, wherein the fixing tube comprises a PI tube.

10. The heating assembly according to claim 8, wherein the clamping structure comprises an opening provided on the layered component, and the temperature measurement element is accommodated in the opening.

11. The heating assembly according to claim 10, wherein the fixing tube is configured to close an outer opening of the opening, and the temperature measurement element is clamped between the heating element and the fixing tube.

12. The heating assembly according to claim 10, wherein the opening longitudinally extends from an end of the layered component.

13. The heating assembly according to claim 10, wherein the clamping structure further comprises a fixing hole provided on the fixing tube, and the fixing hole is configured to locate the temperature measurement element.

14. The heating assembly according to claim 8, further comprising an electrical connector, wherein the heating element is electrically connected to a power supply assembly through the electrical connector.

15. The heating assembly according to claim 14, wherein the electrical connector is clamped between the layered component and the fixing tube.

16. The heating assembly according to claim 14, wherein a first hole is provided on the layered component, the electrical connector is provided with several conductive contact sheets, and the conductive contact sheets pass through the first hole to be in a conductive connection to a conductive portion on the heating element.

17. The heating assembly according to claim 16, wherein the first hole is approximately square.

18. The heating assembly according to claim 16, wherein two first holes are provided on the layered component, an opening configured to accommodate the temperature measurement element is further provided on the layered component, and the opening is located between the two first holes.

19. The heating assembly according to claim 15, wherein the electrical connector is electrically connected to the power supply assembly through a wire, an extending portion is arranged at an end of the electrical connector, and the wire is connected to the extending portion; and
a notch is provided on a side of the layered component, and the electrical connector and at least a part of the wire are accommodated in the notch.

20. The heating assembly according to claim 1, wherein the heating element comprises an infrared coating.

21. A heating assembly, comprising:
a heating tube in which a heating cavity accommodating at least a part of an aerosol generating article is provided;
a temperature measurement element, comprising a probe and a conductive pin connected to the probe, the probe is in contact with the heating tube, and the conductive pin comprises a bending portion; and
an anti-retraction portion, configured to stop the bending portion to prevent the probe from moving.

22. The heating assembly according to claim 21, wherein an outer surface of the heating tube comprises a first position and a second position, and the probe is in contact with the second position;
the heating assembly further comprises a first layered component, the first layered component is arranged at least a part of a periphery of the heating tube, and the first layered component comprises a first guiding groove communicating the first position with the second position; and
the conductive pin comprises the bending portion at the first position or a position adjacent to the first position.

23. The heating assembly according to claim 22, wherein the second position is exposed in the first guiding groove, and the probe is stopped by an extension end point of the first guiding groove at the second position.

24. The heating assembly according to claim 22, wherein the first position is exposed in the first guiding groove, the anti-retraction portion comprises an extension start point of the first guiding groove, and the extension start point is adjacent to the first position.

25. The heating assembly according to claim 22, wherein the second position is exposed in the first guiding groove, and a width of the first guiding groove is greater than or equal to a width of the temperature measurement element.

26. The heating assembly according to claim 22, wherein the heating assembly further comprises a fixing tube, the fixing tube is wound on a periphery of the first layered component, and the anti-retraction portion is arranged on the fixing tube.

27. The heating assembly according to claim 26, wherein the anti-retraction portion comprises a first through hole provided on the fixing tube, the first through hole is in communication with the first position, the conductive pin passes through the first through hole, and at least a part of the bending portion is located in the first through hole.

28. The heating assembly according to claim 27, wherein at least a part of a hole wall of the first through hole is in contact with the bending portion.

29. The heating assembly according to claim 26, wherein the fixing tube blocks a periphery of the second position;
a thickness of the probe in a radial direction of the heating tube is greater than a thickness of the first layered component; or
the fixing tube is in contact with and crushes the probe.

30. The heating assembly according to claim 26, wherein the heating assembly further comprises an electrical connector electrically connected to the heating tube, at least a part of the electrical connector is arranged between the heating tube and the fixing tube, the electrical connector abuts against the fixing tube to provide a tensioning force for the fixing tube to tension, and the fixing tube is configured to crush the probe inward in a radial direction of the heating tube under an action of the tensioning force.

31. The heating assembly according to claim 30, wherein an upper end of the heating tube is open for insertion of at least a part of the aerosol generating article; and
projections of the electrical connector and the probe at the upper end or a lower end of the heating tube do not overlap with each other.

32. The heating assembly according to claim 30, wherein the first layered component further comprises a second guiding groove, and the electrical connector is configured to move along the second guiding groove in a process of being inserted between the heating tube and the fixing tube.

33. The heating assembly according to claim 30, wherein the electrical connector comprises a main body portion abutting against the heating tube and a hooking portion extending from the main body portion, and at least a part of the hooking portion is configured to stop the electrical connector from moving along the heating tube.

34. The heating assembly according to claim 22, wherein the first layered component comprises a heat preservation layer.

35. The heating assembly according to claim 21, wherein the heating assembly further comprises a fixing tube wound on at least a part of a periphery of the heating tube, a first through hole is provided on the fixing tube, at least a part of the probe is kept between the fixing tube and the heating tube, the conductive pin passes through the fixing tube through the first through hole, at least a part of the bending portion is formed in the first through hole, and the anti-retraction portion comprises the first through hole.

36. The heating assembly according to claim 21, wherein the heating assembly further comprises an end cover connected to an end portion of the heating tube, and the anti-retraction portion is arranged on the end cover.

37. The heating assembly according to claim 36, wherein the anti-retraction portion comprises a second through hole provided on the end cover, the conductive pin passes through the second through hole, the conductive pin comprises the bending portion between the second through hole and the probe, and the second through hole is configured to prevent the bending portion from passing through.

38. The heating assembly according to claim 21, wherein the anti-retraction portion comprises a first anti-retraction portion and a second anti-retraction portion, the conductive pin connects the first anti-retraction portion and the second anti-retraction portion, and a geometric connection line between the first anti-retraction portion and the second anti-retraction portion inclines relative to an axial direction of the heating tube.

39. A heating assembly, comprising:
a heating tube in which a heating cavity accommodating at least a part of an aerosol generating article is provided;
a temperature measurement element, comprising a probe and a conductive pin connected to the probe; and
a fixing tube, surrounding at least a part of a periphery of the heating tube, wherein at least a part of the probe is kept between the fixing tube and the heating tube, a first through hole is provided on the fixing tube, and the conductive pin passes through the first through hole; and
an extending direction of the conductive pin between the fixing tube and the heating tube and a run-through direction of the first through hole are not located on the same straight line.

40. A heating assembly, comprising:
a tubular heating element;
a temperature measurement element, fixed to a surface of the heating element; and
a support member, wherein the support member comprises a layered component and a fixing tube, the layered component is configured to surround at least a part of a length of the heating element, and the fixing tube circumferentially wraps at least a part of an outer surface of the layered component, and the layered component is prepared by using a heat preservation material; and
a clamping structure is arranged on the support member, and the clamping structure is configured to fix the temperature measurement element.

41. An infrared heating assembly, comprising:
a tubular heating element;
a temperature measurement element, fixed to a surface of the heating element; and
a support member, wherein the support member comprises a layered component prepared by using aerogel, and the layered component is configured to surround at least a part of a length of the heating element; and
a clamping structure is arranged on the support member, and the clamping structure is configured to fix the temperature measurement element.

42. A heating assembly mounting method, comprising:
winding a heat preservation layered component on an outer surface of a heating element;
sleeving a fixing tube on a periphery of the heat preservation layered component; and
inserting a temperature measurement element from an opening of the heat preservation layered component.

43. The heating assembly mounting method according to claim 42, wherein the inserting a temperature measurement element from an opening of the heat preservation layered component comprises:
inserting the temperature measurement element from a bottom opening of the heat preservation layered component until the temperature measurement element is clamped in a fixing hole of the fixing tube.

44. The heating assembly mounting method according to claim 42, wherein before the sleeving a fixing tube on a periphery of the heat preservation layered component, the method further comprises:
placing an electrical connector on the heat preservation layered component.

45. An aerosol generating device, comprising a heating device and a power supply assembly providing electrical power to the heating device, wherein the heating device comprises the heating assembly according to any one of claims 1 to 40.
